# EUROPÄISCHE PATENTSCHRIFT

(11) **EP 4 303 530 B1**
(45) Veröffentlichungstag und Bekanntmachung des Hinweises auf die Patenterteilung: **08.10.2025**
(21) Anmeldenummer: 22183696.8
(22) Anmeldetag: 07.07.2022
(51) Int. Cl.: G01B 5/008

(54) **VERFAHREN UND ANORDNUNG ZUM PRÜFEN EINER FUNKTIONSFÄHIGKEIT EINES KOORDINATENMESSGERÄTS**
METHOD AND ASSEMBLY FOR TESTING THE OPERABILITY OF A COORDINATE MEASURING DEVICE
PROCÉDÉ ET DISPOSITIF DE VÉRIFICATION D'UNE FONCTIONNALITÉ D'UN APPAREIL DE MESURE DES COORDONNÉES

(43) Veröffentlichungstag der Anmeldung: 10.01.2024
(73) Patentinhaber: Carl Zeiss Industrielle Messtechnik GmbH, 73447 Oberkochen (DE)
(72) Erfinder: ROTTMANN, Reiner, 81243 München (DE); HOLZ, Joachim, 89551 Königsbronn (DE); BRENNER, Daniel, 73571 Göggingen (DE); BURGER, Jochen, 89551 Königsbronn (DE); BETZ, Patrick, 73579 Schechingen (DE)
(74) Vertreter: Brunotte, Joachim Wilhelm Eberhard

(56) Entgegenhaltungen:
- DE-B3- 102019 217 740
- ARENHART RODRIGO SCHONS ET AL: "Devices for Interim Check of Coordinate Measuring Machines: A Systematic Review", MAPAN, SPRINGER INDIA, INDIA, vol. 36, no. 1, 18 January 2021 (2021-01-18), pages 157 - 173, XP037458000, ISSN: 0970-3950, [retrieved on 20210118], DOI: 10.1007/S12647-020-00406-0

## Beschreibung

Die Erfindung betrifft ein Verfahren und eine Anordnung zum Prüfen einer Funktionsfähigkeit eines Koordinatenmessgeräts.

Unter den Begriff Koordinatenmessgerät fallen jegliche Arten von Geräten, mit denen sich Koordinaten von Werkstücken ermitteln lassen. Bei einer Klasse von Koordinatenmessgeräten handelt es sich bei den Koordinaten um Oberflächenkoordinaten, d. h es werden Koordinaten von Oberflächenpunkten von Werkstücken ermittelt. Eine andere Klasse von Koordinatenmessgeräten ist alternativ oder zusätzlich in der Lage, Koordinaten im Inneren von Werkstücken zu ermitteln. Hierzu gehören Koordinatenmessgeräte, die invasive, in den Werkstoff des Werkstücks eindringende Strahlung nutzen und insbesondere die Intensität der durch das Werkstück hindurchtretenden Strahlung messen. Typischerweise wird das Werkstück aus verschiedenen Richtungen durchstrahlt und wird anhand der Ergebnisse der Durchstrahlung eine insbesondere computergestützte Rekonstruktion des erfassten Werkstücks durchgeführt. Derartige Verfahren werden auch als Computertomografie (CT) bezeichnet. Unter den Begriff Koordinatenmessgerät fallen aber auch klassische Koordinatenmessgeräte zum Beispiel Geräte in Portalbauweise oder Gantrybauweise, Horizontalarmgeräte und Gelenkarmgeräte. Auch sind von dem Begriff Koordinatenmessgerät Maschinen erfasst, die zwar nicht primär als Koordinatenmessgeräte konzipiert sind, die aber so eingerichtet sind, wie ein Koordinatenmessgerät zu arbeiten. Insbesondere weisen diese Maschinen zumindest einen Messsensor auf, der für die Ermittlung der Koordinaten genutzt wird. Bekannt sind beispielsweise Roboter, zum Beispiel Roboterarme mit Drehgelenken, an denen anstelle eines Werkzeugs ein Sensor zur Erfassung der Werkstückoberfläche (beispielsweise ein Streifenprojektionssensor) befestigt ist, oder Werkzeugmaschinen, an denen anstelle eines Bearbeitungswerkzeugs oder zusätzlich zu einem Bearbeitungswerkzeug ein Messsensor (beispielsweise ein taktiler Sensor) befestigt ist. Auch sind beispielsweise Hexapodenmechaniken bekannt, an denen anstelle eines Bearbeitungswerkzeuges ein Sensor zur Erfassung der Werkstückoberfläche (beispielsweise ein taktiler Sensor) befestigt ist.

Auch bezüglich der Arten von Sensoren, die von einem Koordinatenmessgerät zur Ermittlung der Koordinaten verwendet werden, ist die Erfindung nicht beschränkt. Es wurden bereits taktile Sensoren als Beispiel erwähnt, bei denen es sich zum Beispiel um solche vom schaltenden Typ oder vom messenden Typ handeln kann. Bei den taktilen Sensoren kann es sich insbesondere um passive oder aktive Sensoren handeln. Aktive Sensoren können ausgestaltet sein, eine Antastkraft zu erzeugen, mit der ein taktiler Taster eine Oberfläche eines zu vermessenden Werkstücks antastet. Häufig werden alternativ oder zusätzlich optische Sensoren eingesetzt. Ferner gibt es zum Beispiel kapazitive Sensoren und induktive Sensoren.

Koordinatenmessgeräte können insbesondere durch Verschleiß oder äußere Einwirkung, aber auch durch geänderte Umgebungsbedingungen (wie zum Beispiel Umgebungstemperatur) ihre Eigenschaften verändern. Dies kann insbesondere die Messgenauigkeit bei der Vermessung von Koordinaten von Werkstücken verringern.

Es ist daher von Vorteil, wenn ein Koordinatenmessgerät von Zeit zu Zeit auf Funktionsfähigkeit überprüft wird. Auf dem Fachgebiet wird eine solche Funktionsprüfung häufig auch als Gesundheitsprüfung (englisch: health check) bezeichnet. Wenn das Gerät voll funktionsfähig ist und dabei insbesondere die zugrunde liegenden Vorgaben hinsichtlich der Messgenauigkeit einhält, kann es als "gesund" bzw. voll funktionsfähig bezeichnet werden.

Es ist möglich, dass ein erfahrener Servicetechniker die Funktionsprüfung vor Ort durchführt und/oder Datensätze, die während der Funktionsprüfung gewonnen wurden, auswertet und auf diese Weise ein Ergebnis der Funktionsprüfung feststellt. Dabei kann der Servicetechniker nicht nur feststellen, ob das Koordinatenmessgerät im Hinblick auf die gewünschte Messgenauigkeit und/oder die vorgesehene Messaufgabe voll funktionsfähig ist oder nicht. Er kann in vielen Fällen auch feststellen, ob in naher Zukunft mit einer verschlechterten Funktionsfähigkeit zu rechnen ist. Gegebenenfalls kann das Koordinatenmessgerät dann gewartet werden oder es können Teile des Geräts ersetzt werden.

Die bei der Funktionsprüfung gewonnenen Datensätze sind insbesondere Datensätze, die die Hardware des Koordinatenmessgeräts betreffen, und können insbesondere als zweidimensionale oder auch als dreidimensionale Diagramme dargestellt werden. Zum Beispiel wird eine geeignete physikalische Größe, wie der Motorstrom eines Antriebs oder wie eine von dem Positionsmesssystem des Koordinatenmessgeräts ermittelte Position, wiederholt und/oder kontinuierlich gemessen. Insbesondere kann die die physikalische Größe alternativ oder zusätzlich eine Abweichung (auch Schleppabstand genannt) einer Soll-Position von einer Ist-Position eines beweglichen und von einem Antrieb angetriebenen Teils des Koordinatenmessgerät, eine elektrische Spannung insbesondere eines Antriebs zur Bewegung eines beweglichen Teils des Koordinatenmessgerät, eine Geschwindigkeit eines beweglichen Teils und eine Beschleunigung eines beweglichen Teils sein. Wenn in dieser Beschreibung von dem Positionsmesssystem des Koordinatenmessgeräts die Rede ist, kann es sich dabei um das einzige Positionsmesssystem handeln. Es kann sich alternativ aber auch um eines von mehreren Positionsmesssystemen handeln, deren Positionsmesswerte dann zum Beispiel von einer Steuerungseinrichtung des Koordinatenmessgeräts empfangen und weiterverarbeitet werden. Ein zweites Positionsmesssystem kann insbesondere das Messsystem eines Messkopfes sein, zum Beispiel eines Messkopfes, an welchem zumindest ein Taster zum taktilen Antasten eines Werkstücks angeordnet ist oder anordenbar ist. Derartige Messköpfe können insbesondere aktive Messköpfe sein und somit zumindest einen Kraftgenerator aufweisen, der über den taktilen Taster eine Antastkraft auf die Oberfläche des angetasteten Werkstücks ausübt. Derartige Messköpfe können ebenfalls Gegenstand der Funktionsprüfung sein.

Insbesondere können zeitliche Verläufe der physikalischen Größe und/oder jeweils Messwerte der physikalischen Größe bei der wiederholten Ausführung eines Bewegungsablaufs durch das Koordinatenmessgerät und/oder durch eine zusätzliche Messeinrichtung aufgenommen werden. Es ist auch möglich, für die Funktionsprüfung eine beim normalen Betrieb des Koordinatenmessgeräts nicht gewünschte oder nicht vorkommende Störung auf das Koordinatenmessgeräts einwirken zu lassen, wie zum Beispiel einen mechanischen Stoß auszuüben oder einen Spannungsimpuls auf einen Antriebsmotor zu geben. Währenddessen und/oder in der Zeit nach dem Einwirken der Störung kann der Verlauf der zumindest einen physikalischen Größe aufgezeichnet werden, um die Reaktion des Koordinatenmessgeräts zu erfassen. Dies wird im Fachgebiet als "Sprungantwort" oder "Jump Test" bezeichnet.

Das zumindest zweidimensionale Diagramm zeigt dann die Werte der jeweiligen physikalischen Größe in Abhängigkeit von einer Ordnungsgröße, die zum Beispiel wiederum eine physikalische Größe ist wie die Zeit während einer einzigen Funktionsprüfung und/oder über wiederholte Funktionsprüfungen und wie die von dem Positionsmesssystem festgestellte(n) Position(en) oder die eine nicht physikalische Größe ist, zum Beispiel eine Indexgröße zur Unterscheidung der wiederholt gewonnenen Werte der physikalischen Größe. Auch bei der vorliegenden Erfindung kann die Funktionsprüfung wie zuvor beschrieben durchgeführt werden, können die genannten Abhängigkeiten vorkommen und/oder können die gewonnenen Datensätze wie beschrieben in einem zumindest zweidimensionalen Diagramm darstellbar sein oder dargestellt werden.

Durch den oben bereits erwähnten Servicetechniker oder andere Experten können bei der Funktionsprüfung gewonnenen Datensätze ausgewertet werden und es kann eine Aussage betreffend die Funktionsfähigkeit des Koordinatenmessgeräts gewonnen werden. Diese Datensätze, denen jeweils eine solche Aussage zugeordnet ist, können für Vergleiche aufbewahrt werden, zum Beispiel in Papierform oder als durch Computer lesbare digitale Daten, zum Beispiel in einem digitalen Datenspeicher oder verteilten Datenspeicher (d.h. über mehrere Speichermedien verteilt). Am Computer erzeugte Berichte über die Funktionsprüfung können zum Beispiel einschließlich der Diagramme und/oder der zugeordneten Aussagen über die Funktionsfähigkeit als elektronische Dokumente zum Beispiel im Datenformat JavaScript Object Notation (JSON) abgespeichert werden.

Auch wenn das Expertenwissen hoch einzuschätzen ist, trifft jeder Experte die erwähnte Aussage zur Funktionsfähigkeit auf Basis seiner eigenen Erfahrungen und Fähigkeiten. In seltenen Fällen kann ein Experte auch Hinweise auf eine nicht vorhandene oder abnehmende Funktionsfähigkeit übersehen oder fälschlicherweise solche Hinweise erkennen.

Ferner ist mit dem Auswerten der gewonnenen Datensätze durch Experten erhebliche Zeit verbunden.

Bei bestimmten Daten können dazu numerische Methoden zur Auswertung angewandt werden, wie z.B. Mittelwertsfilter und anschließende Grenzwertbetrachtung, um zu eindeutigen Aussagen zu gelangen.

Dies trifft jedoch meist nicht auf Daten zu, bei denen ein bestimmter, meist zeitlicher Verlauf der Daten innerhalb der Datensätze erwartet wird, anhand dem eine Aussage über die Güte der Maschineneinstellung erhalten werden soll. Eine Möglichkeit besteht darin, die Korrelation mehrerer Datensätze inklusive deren zeitlichem Verlauf zu evaluieren, um eine Aussage über die Güte treffen zu können. In vielen Fällen ist dies nicht mehr durch einfache numerische Methoden möglich. Die Auswertung beruht daher häufig auf Erfahrungswerten der auswertenden Person.

DE 10 219 217 740 B3 beschreibt ein Verfahren und eine Anordnung zur Überprüfung des Zustandes eines Koordinatenmessgeräts. Dies kann die Überprüfung der Funktionsfähigkeit mit einschließen. Es wird eine Bewegung der Maschine angeregt und die Funktionsfähigkeit der Maschine wird geprüft.

ARENHART RODRIGO SCHONS ET AL: "Devices for Interim Check of Coordinate Measuring Machines: A Systematic Review", MAPAN, SPRINGER INDIA, Bd. 36, Nr. 1, 18. Januar 2021, Seiten 157-173, XP037458000, ISSN: 0970-3950, DOI: 10.1007/S12647-020-00406-0 befasst sich mit der Zuverlässigkeit der Messungen von Koordinatenmessgeräten.

Es ist eine Aufgabe der vorliegenden Erfindung, ein Verfahren und eine Vorrichtung zum Prüfen einer Funktionsfähigkeit eines Koordinatenmessgeräts anzugeben, die eine verbesserte Auswertung, insbesondere Beurteilung, einer Prüfung der Funktionsfähigkeit eines Koordinatenmessgeräts ermöglichen. Diese Aufgabe wird durch ein Verfahren und eine Anordnung gemäß den unabhängigen Ansprüchen gelöst.

Es wird vorgeschlagen, Künstliche Intelligenz (KI) zur Auswertung der bei der Funktionsprüfung gewonnenen Datensätze einzusetzen. Insbesondere kann die KI unter Verwendung von Trainings-Datensätzen trainiert werden, denen jeweils eine Zusatzinformation betreffend die Funktionsfähigkeit eines Koordinatenmessgeräts zugeordnet ist. Zum Beispiel sind die Trainings-Datensätze, die bereits oben erwähnten Datensätze. Die den Trainings-Datensätzen zugeordneten Zusatzinformationen enthalten daher jeweils zumindest eine Information über eine aus dem jeweiligen Trainings-Datensatz ermittelbare Funktionsfähigkeit eines Koordinatenmessgeräts und enthalten optional außerdem eine Information über eine mögliche Ursache für eine verschlechterte Funktionsfähigkeit.

Um einen Prüf-Datensatz durch die KI auszuwerten, ist das Koordinatenmessgerät, für das der Prüf-Datensatz gewonnen wurde, auch das Koordinatenmessgerät, für das Trainings-Datensätze gewonnen wurden, und/oder zumindest ein hiermit technisch vergleichbares, zum Beispiel typgleiches oder typähnliches Koordinatenmessgerät, für das Trainings-Datensätze gewonnen wurden. Die Trainings-Datensätze können daher zum Beispiel sowohl für dasselbe Koordinatenmessgerät wie bei dem Prüf-Datensatz als auch für zumindest ein technisch vergleichbares Koordinatenmessgerät gewonnen worden sein. Sie können aber auch ausschließlich für dasselbe Koordinatenmessgerät oder ausschließlich für zumindest ein technisch vergleichbares Koordinatenmessgerät gewonnen worden sein.

Um zumindest einen auszuwertenden Prüf-Datensatz zu erzeugen, wird das Koordinatenmessgerät betrieben und werden automatisch Betriebssignale erfasst. Die Betriebssignale werden von zumindest einer ersten Erzeugungseinrichtung, die Teil des Koordinatenmessgeräts ist oder eine zusätzliche Erzeugungseinrichtung ist, erzeugt. Die Betriebssignale entsprechen Werten zumindest einer physikalischen Größe, welche charakteristisch für den Betrieb der ersten Erzeugungseinrichtung und/oder des Koordinatenmessgeräts ist. Beispiele für Betriebssignale sind die Signale, welche ein Positionsmesssystem des Koordinatenmessgeräts erzeugt oder eine Antriebsvorrichtung mit einer Antriebssteuerung oder einer Antriebsregelung eines Antriebs des Koordinatenmessgeräts erzeugt und/oder empfängt, etwa ein Motorstrom oder eine Motor-Drehzahl. Ein Beispiel für eine zusätzliche Erzeugungseinrichtung ist ein LaserInterferometer, welches eine Position eines beweglichen Teils des Koordinatenmessgeräts im Laufe der Zeit erfasst. Die entsprechenden Betriebssignale werden in diesem Fall innerhalb des Laser-Interferometers erzeugt, zum Beispiel Interferenzsignale gemäß der Interferenz zweier reflektierter Laserstrahlen.

Der auszuwertende Prüf-Datensatz wird automatisch von einer zweiten Erzeugungseinrichtung aus den erfassten Betriebssignalen erzeugt, zum Beispiel durch mindestens einen an die zumindest eine erste Erzeugungseinrichtung angeschlossenen Computer. Bei dem mindestens einen Computer kann es sich um einen Computer handeln, der Teil des Koordinatenmessgeräts und/oder Teil einer Steuerung des Koordinatenmessgeräts ist und während des normalen Betriebes des Koordinatenmessgeräts zum Beispiel den Betrieb steuert. Alternativ oder zusätzlich kann es sich zum Beispiel um einen Computer handeln, der mit der zumindest einen ersten Erzeugungseinrichtung verbunden ist, oder es kann sich zum Beispiel um mehrere Computer handeln, die über Verbindungen zum Übertragen von computerlesbaren Signalen miteinander und mit der zumindest einen ersten Erzeugungseinrichtung verbunden sind. Auch die erste Erzeugungseinrichtung selbst kann ausgestaltet sein, den Prüf-Datensatz aus den erfassten Betriebssignale zu erzeugen (und in diesem Fall auch die zweite Erzeugungseinrichtung sein) oder zumindest dazu beizutragen.

Ferner wird der zumindest eine auszuwertende Prüf-Datensatz automatisch zu einer Auswertungseinrichtung übertragen. Diese Auswertungseinrichtung weist die Künstliche Intelligenz (KI) auf. Auch wenn dies möglich ist, muss die Auswertungseinrichtung nicht durch einen einzigen Computer realisiert werden, sondern kann insbesondere ein verteiltes und/oder vernetztes Computersystem sein.

Verbindungen zum Übertragen von computerlesbaren Signalen zwischen mehreren Computern, gegebenenfalls auch von und zu der zumindest einen Erzeugungseinrichtung zur Erzeugung der Betriebssignale, und/oder den Teilen des Computersystems können lokale Verbindungen und/oder Fernverbindungen (zum Beispiel Verbindungen zwischen Teilen von Datenübertragungsnetzen wie das Internet) sein. Bevorzugt wird in jedem Fall, dass zumindest ein Teil der Auswertungseinrichtung, durch den die KI zumindest teilweise realisiert ist, über eine Fernverbindung mit der zumindest einen Erzeugungseinrichtung verbunden ist, die die Betriebssignale erzeugt. Diese Verbindung kann indirekt über eine Vorrichtung oder ein System realisiert sein, die/das den Prüf-Datensatz aus den erfassten Betriebssignalen erzeugt.

Erfindungsgemäß wird daher vorgeschlagen: Ein Verfahren zum Prüfen einer Funktionsfähigkeit eines Koordinatenmessgeräts, mit folgenden Schritten:
- Betreiben des Koordinatenmessgeräts und automatisches Erfassen von Betriebssignalen, die von zumindest einer Einrichtung des Koordinatenmessgeräts und/oder einer zusätzlichen Einrichtung während des Betriebs erzeugt werden und die Werten zumindest einer physikalischen Größe entsprechen, welche charakteristisch für den Betrieb der Einrichtung und/oder des Koordinatenmessgeräts ist,
- automatisches Erzeugen eines Prüf-Datensatzes aus den erfassten Betriebssignalen und automatisches Übertragen des Prüf-Datensatzes zu einer Auswertungseinrichtung, die eine künstliche Intelligenz aufweist,
- Auswerten des Prüf-Datensatzes mittels der künstlichen Intelligenz durch die Auswertungseinrichtung, wobei die künstliche Intelligenz auf Basis eines Trainings unter Verwendung von Trainings-Datensätzen mit zugeordneten Zusatzinformationen, die jeweils zumindest eine Information über eine aus dem jeweiligen Trainings-Datensatz ermittelbare Funktionsfähigkeit des Koordinatenmessgeräts oder eines vergleichbaren Koordinatenmessgeräts enthalten, in einem betriebsfertigen Zustand ist und wobei die künstliche Intelligenz aus dem Prüf-Datensatz eine Aussage betreffend die Funktionsfähigkeit des Koordinatenmessgeräts ableitet,
- Ausgeben der Aussage betreffend die Funktionsfähigkeit des Koordinatenmessgeräts.

Erfindungsgemäß wird ferner vorgeschlagen: Eine Anordnung zum Prüfen einer Funktionsfähigkeit eines Koordinatenmessgeräts, aufweisend:
- zumindest eine erste Erzeugungseinrichtung, die ausgestaltet ist, während eines Betriebes des Koordinatenmessgeräts automatisch Betriebssignale zu erzeugen, wobei die Betriebssignale Werten zumindest einer physikalischen Größe entsprechen, welche charakteristisch für den Betrieb der ersten Erzeugungseinrichtung und/oder des Koordinatenmessgeräts ist,
- eine zweite Erzeugungseinrichtung, die die erste Erzeugungseinrichtung oder eine andere Einrichtung ist und die ausgestaltet ist, automatisch einen Prüf-Datensatz aus den erfassten Betriebssignalen zu erzeugen und automatisch den Prüf-Datensatz zu einer Auswertungseinrichtung zu übertragen,
- die Auswertungseinrichtung, die eine künstliche Intelligenz aufweist,
wobei die Auswertungseinrichtung ausgestaltet ist, den Prüf-Datensatz mittels der künstlichen Intelligenz auszuwerten, wobei die künstliche Intelligenz auf Basis eines Trainings unter Verwendung von Trainings-Datensätzen mit zugeordneten Zusatzinformationen, die jeweils zumindest eine Information über eine aus dem jeweiligen Trainings-Datensatz ermittelbare Funktionsfähigkeit des Koordinatenmessgeräts oder eines vergleichbaren Koordinatenmessgeräts enthalten, in einem betriebsfertigen Zustand ist und wobei die künstliche Intelligenz ausgestaltet ist, aus dem Prüf-Datensatz eine Aussage betreffend die Funktionsfähigkeit des Koordinatenmessgeräts abzuleiten.

Ausgestaltungen der Anordnung ergeben sich aus der Beschreibung von Ausgestaltungen des Verfahrens. Zum Beispiel weist die Anordnung eine Trainingseinrichtung auf, die ausgestaltet ist das Training der Künstlichen Intelligenz unter Verwendung der Trainings-Datensätze mit den zugeordneten Zusatzinformationen durchzuführen. Dies spricht einer Ausgestaltung des Verfahrens, deren Teil das Training der Künstlichen Intelligenz unter Verwendung der Trainings-Datensätze mit den zugeordneten Zusatzinformationen ist.

Die Trainingseinrichtung ist zum Beispiel ein Computer oder eine Anordnung von Computern mit Computer Software, die die Durchführung des Trainings steuert. Der Computer, die Computeranordnung oder einer der Computer der Anordnung kann auch die Künstliche Intelligenz aufweisen, welche den Prüf-Datensatz auswertet und aus dem Prüf-Datensatz eine Aussage betreffend die Funktionsfähigkeit des Koordinatenmessgeräts ableitet.

Die künstliche Intelligenz leitet aus dem Prüf-Datensatz eine Aussage betreffend die Funktionsfähigkeit des Koordinatenmessgeräts ab. Dabei nutzt die KI das Ergebnis ihres Trainings. Daher werden die Trainings-Datensätze mit den zugeordneten Zusatzinformationen dazu genutzt dem Prüf-Datensatz die Aussage betreffend die Funktionsfähigkeit zuzuordnen.

Die Verwendung der Künstlichen Intelligenz, welche auf Basis der Trainings-Datensätze trainiert worden ist, hat den Vorteil, dass bei der Auswertung der Prüf-Datensätze subjektive und auf der persönlichen Erfahrung von menschlichen Experten beruhende Ergebnisse ausgeschlossen werden. Ferner wird Zeit für die Auswertung gespart und können sich Experten anderen Aufgaben zuwenden. Dies schließt nicht aus, dass zumindest ein Experte das Ergebnis der KI überprüft und/oder den Betrieb der KI überwacht. Da außerdem die Verfügbarkeit für eine Auswertung der Prüf-Datensätze bei Nutzung der KI größer ist, kann die Prüfung der Funktionsfähigkeit häufiger stattfinden und zum Beispiel gemäß einem Zeitplan im Voraus festgelegt werden. Wenn die ausgewerteten Prüf-Datensätze vorzugsweise mit der durch ihre Auswertung abgeleiteten Aussage über die Funktionsfähigkeit insbesondere computerlesbar abgespeichert werden, kann außerdem bei Auswertung zumindest eines durch erneute Funktionsprüfung gewonnenen Prüf-Datensatzes ein Vergleich mit dem Zustand des Koordinatenmessgeräts zum Zeitpunkt der früher gewonnenen Prüf-Datensätze durchgeführt werden. Dies wiederum ermöglicht es, Prognosen für die zukünftige Veränderung der Funktionsfähigkeit des Koordinatenmessgeräts zu erstellen. Zum Beispiel kann der bisherige zeitliche Verlauf der Funktionsfähigkeit in die Zukunft extrapoliert werden.

Im Folgenden werden Beispiele für eine "erste" Einrichtung eines Koordinatenmessgeräts beschrieben, die während des Betriebs des Koordinatenmessgeräts Betriebssignale erzeugt. Dabei werden auch die entsprechenden physikalischen Größen genannt, welche charakteristisch für den Betrieb der Einrichtung und/oder des Koordinatenmessgeräts sind.

Ein erstes Beispiel betrifft Koordinatenmessgeräte mit einem taktilen Sensor oder auch mit einem optischen Sensor, der einen punktförmigen oder nahezu punktförmigen Bereich des zu vermessenden Werkstücks optisch erfasst. Zu solchen optischen Sensoren gehören konfokale Sensoren, die den Abstand zu dem Oberflächenbereich messen und dabei ein Spektrum von Messstrahlung auf den Oberflächenbereich einstrahlen. Aufgrund der optischen Dispersion hängt der Fokusabstand des Sensors von der Wellenlänge bzw. Frequenz der Messstrahlung ab. Daher wird derjenige spektrale Anteil der Messstrahlung mit größter Intensität zum Sensor zurück reflektiert, dessen Fokusabstand gleich dem momentanen Abstand des Sensors zum bestrahlten Oberflächenbereich ist.

Bei den genannten taktilen oder optischen Sensoren kommt es darauf an, dass die Position des vom Sensor erfassten punktförmigen oder nahezu punktförmigen Oberflächenbereichs genau erfasst wird. Bei Koordinatenmessgeräten, die nicht dazu in der Lage sind, den Oberflächenbereich reproduzierbar durch den Sensor anzutasten, ist dies in der Regel nicht der Fall. Auch ist es häufig gewünscht, eine optische oder taktile Antastung eines bestimmten Oberflächenbereichs wiederholen zu können oder einen Messort auf der Oberfläche eines Werkstücks gezielt antasten zu können. Auch in diesem Fall kommt es daher auf die Reproduzierbarkeit bzw. Genauigkeit der Antastung an.

Es wird daher vorgeschlagen, insbesondere die Antastreproduzierbarkeit (häufig Antastabweichung genannt) des zu prüfenden Koordinatenmessgeräts festzustellen. Dabei wird insbesondere das Positionsmesssystem des Koordinatenmessgeräts als Einrichtung genutzt, welche in diesem Fall Positionswerte erzeugt. Die physikalische Größe ist daher die Position eines beweglichen Teils des Koordinatenmessgeräts, durch dessen Bewegung der Sensor bewegt wird oder der der Sensor ist, oder die physikalische Größe ist die Relativposition des Sensors oder eines mit dem Sensor verbundenen Teils des Koordinatenmessgeräts zu einem anderen Gegenstand wie zum Beispiel dem zu vermessenden Werkstück. Die auszuwertende Größe kann dann die erwähnte Antastabweichung sein, welche die Abweichung zwischen einem Soll-Wert und einem Ist-Wert ist. Der Ist-Wert wird aus dem Positionsmesssystem erhalten, während der Soll-Wert zum Beispiel aus der Bewegungssteuerung das Koordinatenmessgerät erhalten wird, oder allgemeiner formuliert aus einer Vorgabe für die Bewegung des jeweiligen zu bewegenden Teils.

Die Antastabweichung kann zum Beispiel dadurch festgestellt werden, dass eine Mehrzahl von Oberflächenpunkten eines Werkstücks und insbesondere eines Prüf-Normals in vorgegebenen Abständen zueinander zum Beispiel entlang einer geraden Linie angetastet wird. Dabei können die Abstände der Antastpunkte (d.h. der Soll-Werte) vorgegeben sein. Es ist auch möglich, nach dem Antasten einer Mehrzahl von Antastpunkten mit einem ersten Abstand zwischen jeweils zwei Punkten den jeweiligen Abstand zwischen folgenden Punkten zu erhöhen.

Alternativ oder zusätzlich kann wiederholt derselbe Messpunkt an einem Werkstück angetastet werden, insbesondere indem der Sensor den Erfassungsort auf unterschiedlichen Wegen erreicht. Im Fall eines taktilen Sensors ist der Erfassungsort insbesondere der Ort des Messpunktes. Im Fall eines optischen Sensors ist der Erfassungsort der Ort, von dem aus der Sensor die Oberfläche des Werkstücks mit dem Messpunkt erfasst.

Als Ergebnis des Funktionstests kann insbesondere festgestellt werden, ob zumindest eine der Antastabweichungen zu groß ist. Alternativ kann festgestellt werden, ob nicht für mehr als eine vorgegebene Anzahl oder für mehr als einen vorgegebenen Prozentsatz von angetasteten Oberflächenpunkten eine vorgegebene maximale Antastabweichung erreicht und/oder überschritten wurde. Zum Beispiel kann jeweils ein entsprechender Grenzwert vorgegeben sein/werden. Ferner alternativ oder zusätzlich kann festgestellt werden, ob eine Tendenz der Antastabweichungen der nacheinander angetasteten Oberflächenpunkte darauf hindeutet, dass bei der Wiederholung des Funktionstests in naher Zukunft die maximale Antastabweichung erreicht wird.

Als zweidimensionales Diagramm kann die Antastabweichung dargestellt werden, indem die Antastabweichung der einzelnen angetasteten Oberflächenpunkte über der Ordnungszahl der angetasteten Oberflächenpunkte aufgetragen wird. Zum Beispiel hat der erste angetastete Oberflächenpunkt die Ordnungszahl eins usw. Alternativ kann die Antastabweichung über der Position der Oberflächenpunkte entlang einer Raumrichtung aufgetragen werden. Zum Beispiel bei konstanten Soll-Abständen zwischen jeweils zwei aufeinanderfolgenden Oberflächenpunkten in dieser Raumrichtung ergeben sich daher in konstanten Abständen aufgetragene Antastabweichungen. Zur Feststellung des Antastverhaltens bei Verwendung eines aktiven Messkopfes mit taktilem Taster kann wie folgt vorgegangen werden: Es wird ein Oberflächenpunkt eines Werkstücks, insbesondere eines Prüf-Normals, angetastet, d. h. der taktile Kontakt zwischen dem Taster und dem Oberflächenpunkt wird hergestellt, indem der Taster an die Oberfläche des Werkstücks heranbewegt wird. Während des Vorgangs und insbesondere ab Herstellung des taktilen Kontakts werden die Messwerte des Positionsmesssystems des Messkopfes, mit denen die Auslenkung des Tasters relativ zu einem Referenzpunkt des Messkopfes gemessen wird, fortlaufend aufgenommen. Derartige Messköpfe mit taktilem Taster weisen schwingungsfähige Systeme auf, insbesondere wegen mechanischer Federung und Spulen zur Erzeugung der Messkraft aber auch wegen der Elastizität des Tasters selbst. Daher wird ab Herstellung des taktilen Kontakts ein Ausschlag der Messwerte des Positionsmesssystems beobachtet, der im Laufe der Zeit in der Art einer Schwingung abklingt und sich jeweils einem konstanten Wert annähert. Als Ergebnis des Funktionstest können die Höhe des Ausschlags und/oder die Zeit bis zum Abklingen der Schwingung, d. h. bis zum Erreichen eines konstanten Wertes festgestellt. Insbesondere kann geprüft werden, ob der Ausschlag zu hoch ist und/oder die Zeit bis zum Abklingen der Schwingung zu lang ist. Beispielsweise sind entsprechende Grenzwerte vorgegeben, die nicht überschritten werden dürfen, um den Funktionstest zu bestehen.

Als zweidimensionales Diagramm kann das Antastverhalten, insbesondere wie beschrieben, für jeweils einen Messwert des Positionsmesssystems des Messkopfes als Funktion der Zeit während des beschriebenen Antastvorganges dargestellt werden.

Bei variierenden Antastabständen (z.B. wird jeweils ein linearer Fahrweg des Sensors vor dem Erreichen des Antastpunktes durchlaufen) kann in dem Diagramm die Abweichung jedes Antastpunktes abhängig von dem jeweiligen Fahrweg aufgetragen werden. Das so entstandene Diagramm zeigt außer der Güte des Antastverhaltens - insbesondere der Streuung - auch weitere Merkmale des Systems, wie beispielsweise Eigenfrequenzen, die bei bestimmten Abständen angeregt werden, oder die Wirkung einer unter Umständen schlecht eingestellten Dämpfung des aktiven Sensors in Form von erhöhten Streuungen bei bestimmten Antastabständen.

Gemäß den Ansprüchen weisen der Prüf-Datensatz und die Trainings-Datensätze die Werte der zumindest einen physikalischen Größe in Abhängigkeit von einer Ordnungsgröße auf (bzw. im Fall einer mehr als zweidimensionalen Abhängigkeit von mehr als einer Ordnungsgröße auf). Unter einer Ordnungsgröße wird insbesondere verstanden, dass die Werte der physikalischen

Größe(n) entsprechend der Ordnung der zugeordneten Werte der Ordnungsgröße geordnet werden können und insbesondere entsprechend dieser Ordnung in einem Diagramm dargestellt werden können. Ein Beispiel für ein Diagramm ist ein zweidimensionales Diagramm, in dem die Werte der Ordnungsgröße entlang einer ersten Achse (zum Beispiel X-Achse) und die Werte der jeweiligen physikalischen Größe entlang einer zweiten Achse (zum Beispiel Y-Achse) aufgetragen sind.

Eine solche Abhängigkeit ermöglicht es daher allgemein, die Werte der physikalischen Größe(n) in einem entsprechenden Diagramm darzustellen. Eine solche Erstellung von Diagrammen kann optional stattfinden und zu einer Ausgabe des Diagramms zum Beispiel auf einem Bildschirm oder durch einen Drucker führen.

In jedem Fall ist es gemäß der Erfindung vorgesehen, dass die Künstliche Intelligenz beim Auswerten des Prüf-Datensatzes auf Basis ihres Trainings unter Berücksichtigung von Diagramm-Merkmalen zumindest eines Diagramms der Abhängigkeit der physikalischen Größe von einer Ordnungsgröße des Prüf-Datensatzes
a) eine Entsprechung oder eine Ähnlichkeit des Prüf-Datensatzes zu einer durch die Trainings-Datensätze festgehaltenen Prüfungssituation ermittelt oder
b) feststellt, dass es keine Entsprechung oder Ähnlichkeit des Prüf-Datensatzes zu einer durch die Trainings-Datensätze festgehaltenen Prüfungssituation gibt.

Im Fall a) leitet die KI die Aussage betreffend die Funktionsfähigkeit des Koordinatenmessgeräts entsprechend der durch die Trainings-Datensätze festgehaltenen entsprechenden oder ähnlichen Prüfungssituation ab.

Obwohl die Erstellung der Diagramme lediglich optional stattfindet, ist es in jedem Fall möglich, anhand der Diagramm-Merkmale zumindest einen dem Prüf-Datensatz entsprechenden oder ähnlichen Trainings-Datensatz zu ermitteln. Diagramm-Merkmale können auch unmittelbar aus den Werten der physikalischen Größe in Abhängigkeit von der Ordnungsgröße (wie beispielsweise der Zeit oder dem Ort oder einer Position) ermittelt werden. Die Diagramm-Merkmale können insbesondere jegliche Merkmale sein, die das Diagramm als mehrdimensionales, mindestens zweidimensionales, Diagramm beschreiben und dabei die Werte der physikalischen Größe in ihrer Abhängigkeit zu der Ordnungsgröße berücksichtigen. Beispiele von Merkmalen sind: Positionen der Werte in der Ebene des Diagramms (im Fall eines zweidimensionalen Diagramms) oder dem Raum des Diagramms (im Fall eines dreidimensionalen Diagramms; wobei auch mehr als dreidimensionale Diagramme und Abhängigkeiten möglich sind und auch zum Beispiel im Fall einer vierdimensionalen Abhängigkeit, d. h. der Abhängigkeit von drei physikalischen Größen von einer Ordnungsgröße, von einem Raum gesprochen werden kann); aus diesen Positionen der Werte abgeleitete Parameter; Merkmale, die den Verlauf der Werte in Abhängigkeit von der Ordnungsgröße beschreiben; Maxima und/oder Minima der Werte; statistische Größen wie zum Beispiel Mittelwerte und Standardabweichung der Werte der physikalischen Größe.

Die Auswertungseinrichtung weist wie erwähnt eine künstliche Intelligenz (KI) auf, zum Beispiel auf Basis eines neuronalen Netzes, das durch die Auswertungseinrichtung realisiert ist. Bei einem Training der Auswertungseinrichtung kann ein Maschinenlernverfahren angewendet werden, zum Beispiel indem das neuronale Netz unter Verwendung von Lerndaten (die die Trainings-Datensätze aufweisen) trainiert wird. Insbesondere können die Trainings-Datensätze das gleiche Datenformat aufweisen wie die Prüf-Datensätze, die der Auswertungseinrichtung im Rahmen der Prüfung der Funktionsfähigkeit des Koordinatenmessgeräts zugeführt werden. Im Unterschied zu der Prüfung der Funktionsfähigkeit erhält die Auswertungseinrichtung aber beim Training zusätzlich für jeden Trainings-Datensatz zumindest eine Zusatzinformation, die mit dem Trainings-Datensatz verknüpft ist. Die Zusatzinformation betrifft die Funktionsfähigkeit eines Koordinatenmessgeräts durch dessen Betrieb der Datensatz gewonnen wurde, wobei auch zumindest ein Trainings-Datensatz alternativ zu einem tatsächlichen Betrieb durch eine Simulation eines Betriebes eines Koordinatenmessgeräts gewonnen werden kann. Insbesondere kann die Zusatzinformation von einem Experten durch Auswertung des Datensatzes gewonnen worden sein. Bei dem Experten kann es sich um einen Menschen oder eine Gruppe von Menschen handeln, um zumindest einen Computer zum Beispiel mit künstlicher Intelligenz oder um eine Interaktion zumindest eines Menschen mit zumindest einem solchen Computer. In jedem Fall wird Expertenwissen dazu verwendet, die Zusatzinformation zu erzeugen. Ursprünglich kann es dabei nicht das vorrangige Ziel gewesen sein, eine Zusatzinformation für das Training der Auswertungseinrichtung zu erzeugen, sondern die Funktionsfähigkeit eines Koordinatenmessgeräts zu prüfen. Ein solches Prüfergebnis, das den Datensatz und die Zusatzinformation betreffend die Funktionsfähigkeit enthält, ist jedoch für das Training der Auswertungseinrichtung geeignet.

Das Training der Künstlichen Intelligenz kann unter Verwendung der Trainings-Datensätze mit den zugeordneten Zusatzinformationen Teil des Verfahrens sein und/oder die Anordnung zum Prüfen der Funktionsfähigkeit des Koordinatenmessgeräts kann ausgestaltet sein, auch das Training der Künstlichen Intelligenz durchzuführen.

Wenn die Künstliche Intelligenz der Auswertungseinrichtung bereits mittels einer Vielzahl von Trainings- Datensätzen und zugehöriger Zusatzinformationen trainiert worden ist, dann kann sie unter Verwendung zumindest eines weiteren Trainings-Datensatzes und zugeordneter Zusatzinformation zusätzlich trainiert werden. Hierdurch kann ein verbesserter Trainingszustand erreicht werden. Dies ermöglicht es auch die Auswertungseinrichtung dazu zu verwenden, bereits vorgenommene Auswertungen von Prüf-Datensätzen auf Basis des verbesserten Trainingszustandes zu wiederholen. Der zumindest eine weitere Trainings-Datensatz kann insbesondere ein zuvor ausgewerteter Prüf-Datensatz sein.

Die Künstliche Intelligenz kann insbesondere durch zumindest ein neuronales Netz realisiert werden. Das Training eines neuronalen Netzes bedeutet insbesondere die Einstellung und/oder Optimierung der neuronalen Parameter und/oder der Verbindungsstruktur der Neuronen des Netzes. Zu den Parametern gehören insbesondere Gewichte für die Übertragung der Signale zwischen den Neuronen des neuronalen Netzes, aber auch etwaig vorhandene Schwellenwerte für die Tätigkeit der Neuronen. Die Verbindungsstruktur der Neuronen kann insbesondere dadurch geändert werden, dass neue Verbindungen zwischen Neuronen geschaffen werden oder bestehende Verbindungen gelöscht werden. Dies schließt die Möglichkeit mit ein zum Beispiel Bias-Einheiten vorzusehen und zu entfernen.

Als betriebsfertiges trainiertes Netz kann daher ein neuronales Netz bezeichnet werden, dessen neuronale Parameter und/oder dessen Struktur derart optimiert wurden, dass Datensätze aus der Prüfung eines Koordinatenmessgeräts mit hinreichender Wahrscheinlichkeit korrekt ausgewertet werden können. Dabei beziehen sich das Training und die Betriebsfertigkeit insbesondere jeweils auf eine bestimmte Art der Prüfung des Koordinatenmessgeräts und somit auf eine bestimmte Art von Datensätzen. Beispiele für unterschiedliche Arten der Prüfung wurden bereits gegeben, wie zum Beispiel die Prüfung auf Antastreproduzierbarkeit und die Prüfung des Verhaltens des Sensors bei der Antastung einer Oberfläche eines zu vermessenden Werkstücks.

Bei dem neuronalen Netz kann es sich zum Beispiel um ein faltungsbasiertes neuronales Netz (Convolutional Neural Network, CNN) handeln. Insbesondere können verschiedene Arten von Datensätzen optional auch mit verschiedenen Typen von neuronalen Netzen als künstliche Intelligenz ausgewertet werden.

Ausführungsbeispiele und optionale Merkmale der Erfindung werden nun unter Bezugnahme auf die beigefügten Figuren beschrieben. Die einzelnen Figuren der Zeichnung zeigen:
- Fig. 1: ein Koordinatenmessgerät in Portalbauweise als Beispiel für eine Art von Koordinatenmessgeräten, bei denen ein Funktionstest durchgeführt werden kann,
- Fig. 2: schematisch Schritte einer Ausführungsform des Verfahrens zum Prüfen einer Funktionsfähigkeit eines Koordinatenmessgeräts,
- Fig. 3: ein erstes zweidimensionales Diagramm, das fünfzig Werte der Antastabweichung bezüglich einer linearen Achse eines Koordinatenmessgeräts in Abhängigkeit der Kennzahl der jeweiligen Antastung einer Oberfläche eines Werkstücks mit einem taktilen Taster das Koordinatenmessgerät darstellt und einem ersten Prüf-Datensatz oder Trainings-Datensatz entspricht,
- Fig. 4: ein zweites zweidimensionales Diagramm, das im Vergleich zu Fig. 3 fünfzig andere Werte der Antastabweichung bezüglich der linearen Achse des Koordinatenmessgeräts in Abhängigkeit der Kennzahl der jeweiligen Antastung darstellt und einem zweiten Prüf-Datensatz oder Trainings-Datensatz entspricht,
- Fig. 5: ein Diagramm, das für eine kreisförmige Bewegung eines beweglichen Teils eines Koordinatenmessgeräts innerhalb einer x-z-Ebene eines Koordinatensystems des Koordinatenmessgeräts Abweichungen von der idealen kreisförmigen Bewegung darstellt, nämlich basierend auf ausgelesenen Werten des Positionsmesssystems des Koordinatenmessgerät, und
- Fig. 6: schematisch ein Koordinatenmessgerät, das über ein Datenübertragungsnetz mit angeschlossenem, insbesondere verteiltem, Datenspeicher (Daten-Cloud) mit einer Auswertungseinrichtung zur Auswertung von Prüf-Datensätzen verbunden ist.

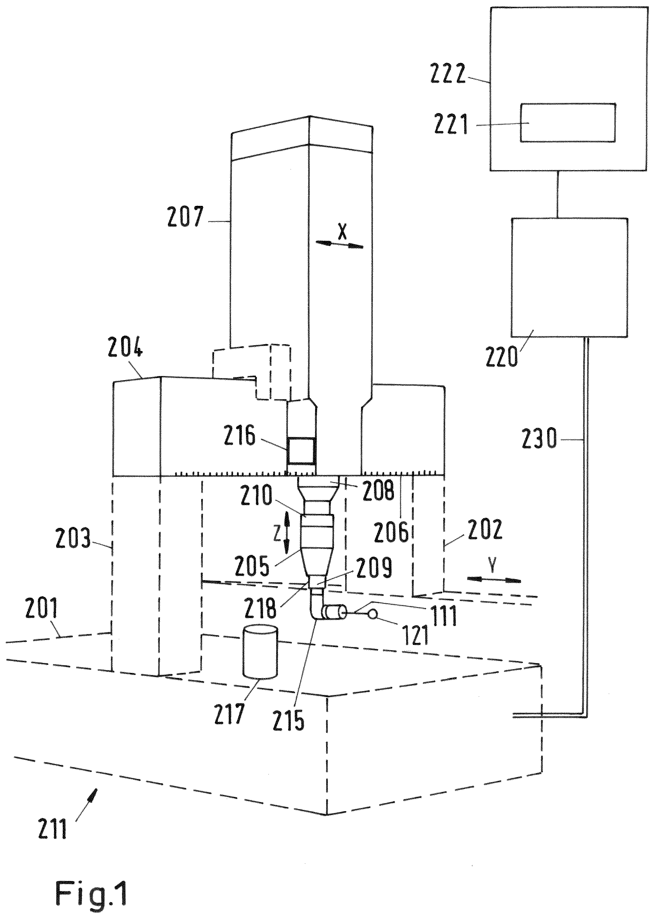

Das in Fig. 1 dargestellte Koordinatenmessgerät (KMG) 211 in Portalbauweise weist einen Messtisch 201 auf, über dem Säulen 202, 203 in Y-Richtung eines kartesischen Koordinatensystems X-Y-Z beweglich angeordnet sind. Die Säulen 202, 203 bilden zusammen mit einem Querträger 204 ein Portal des KMG 211. Der Querträger 204 ist an seinen gegenüberliegenden Enden mit den Säulen 202 bzw. 203 verbunden. Nicht dargestellte Elektromotoren verursachen als Antriebsmotoren die Linearbewegung der Säulen 202, 203 und der von den Säulen 202, 203 getragenen Teile entlang der Bewegungs-Achse, die in Y-Richtung verläuft. Dabei ist z. B. lediglich einer der beiden Säulen 202, 203 oder jeder der beiden Säulen 202, 203 ein Elektromotor zugeordnet. Der Querträger 204 ist mit einem Querschlitten 207 kombiniert, welcher z. B. luftgelagert entlang dem Querträger 204 in X-Richtung des kartesischen Koordinatensystems beweglich ist. Die momentane Position des Querschlittens 207 relativ zu dem Querträger 204 kann anhand einer Maßstabsteilung 206 festgestellt werden. Die Bewegung des Querschlittens 207 entlang der Bewegungs-Achse in X-Richtung wird durch zumindest einen weiteren Elektromotor als Antrieb (nicht dargestellt) angetrieben. An dem Querschlitten 207 ist eine in vertikaler Richtung bewegliche Pinole 208 gelagert, die an ihrem unteren Ende über eine Montageeinrichtung 210 mit einem Messkopf 205 verbunden ist. Über eine Wechselschnittstelle 209 ist ein abgewinkeltes einachsiges Drehgelenk 215 an den Messkopf 205 angekoppelt. Mit dem Drehgelenk 215 ist ein Taststift 111 mit Tastkugel 121 verbunden. Das Drehgelenk 215 kann angetrieben durch einen weiteren Elektromotor (nicht dargestellt) um eine parallel zur Z-Richtung verlaufende Drehachse des kartesischen Koordinatensystems gedreht werden, sodass der Taststift z. B. in Richtung eines auf dem Messtisch 201 stehenden Messobjekts 217 ausgerichtet wird. Anders als in Fig. 1 dargestellt kann statt dem Drehgelenk 215 z. B. ein aktiver Messkopf an der Wechselschnittstelle 209 angeordnet sein, an dem wiederum der Taststift angeordnet ist. Der aktive Messkopf kann ein eigenes Positionsmesssystem aufweisen, dessen Positionsmesswerte zu der Steuerung des KMG 211 übertragen werden.

Durch eine Mehrzahl von kurzen in vertikaler Richtung verlaufenden Strichen am unteren Ende des Querträgers 204 in Fig. 1 ist ein Maßstab des Positionsmesssystems des KMG 211 dargestellt. Weitere Maßstäbe können sich insbesondere in vertikaler Richtung (Z-Richtung) entlang der Pinole 208 erstrecken und in horizontaler Richtung entlang der Längskanten des Messtischs 201 (in Y-Richtung) erstrecken. Mit zugeordneten Positionsmesssensoren, die jeweils an einem Teil des KMG 211 angeordnet sind, relativ zu dem sich der Maßstab bewegt, misst das Positionsmesssystem (direkt unter Beteiligung der Pinole oder indirekt ohne Beteiligung der Pinole) die Position der Pinole 208, insbesondere in Y-Richtung, X-Richtung und Z-Richtung.

Dargestellt in Fig. 1 ist ferner eine Auswertungseinrichtung 220, die die Messsignale des Messkopfes über eine schematisch dargestellte Verbindung 230 empfängt. Eine schematisch dargestellte Steuerung 222 des KMG 211 steuert die Antriebe (z.B. die o.g. Elektromotoren) an. Insbesondere ist die Steuerung 222 dazu in der Lage, durch Steuerung der Antriebe den Taststift 111 in eine gewünschte Position zu verfahren und den Taststift 111 in eine gewünschte Messrichtung auszurichten.

Die Steuerung 222 ist ferner mit einer Testeinrichtung 221 kombiniert, oder weist diese auf, unter deren Verwendung mittels der ein Funktionstest des KMG 211 durchgeführt werden kann.

In Fig. 1 sind ferner schematisch zusätzliche Elemente 216 und 218 an dem KMG 211 dargestellt, die optional für die Durchführung des Funktionstests und die Aufnahme der Werte der oben erwähnten physikalischen Größen verwendet werden können. Diese zusätzlichen Elemente 216, 218 können zum Beispiel nach der Durchführung des Funktionstests wieder entfernt werden. Es kann sich bei diesen Elemente 216, 218 beispielsweise um Positionssensoren oder Elemente eines zusätzlichen Positionsmesssystems handeln.

Die Testeinrichtung 221 ist zum Beispiel über eine nicht dargestellte Funkverbindung oder Leitungsverbindung mit dem Internet verbunden und steht auf diese Weise zum Beispiel mit einer Daten-Cloud in Verbindung.

Nicht nur bezogen auf das in Fig. 1 dargestellte Koordinatenmessgerät können die bei der Funktionsprüfung gewonnenen Daten zum Beispiel vor ihrer Übertragung in die Ferne (beispielsweise über das Internet oder ein anderes Datenübertragungsnetz) und zum Beispiel in die Daten-Cloud in ein menschen- und computerlesbarer Datenformat gebracht werden. Auch wenn das Datenformat lediglich computerlesbar ist, wird die Verwendung eines einheitlichen Datenformats für die Trainings-Datensätze und die Prüf-Datensätze bevorzugt. In jedem Fall kann die Übertragung der gewonnenen Daten mittels geeigneter Software und zumindest eines Computers durchgeführt werden.

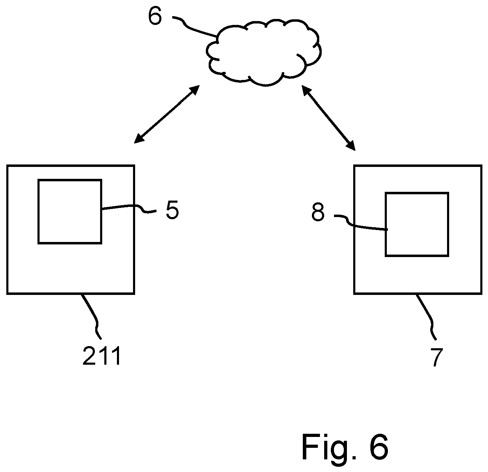

Fig. 6 zeigt schematisch ein Koordinatenmessgerät 211, bei dem es sich lediglich beispielsweise um das in Fig. 1 dargestellte Koordinatenmessgerät handelt. Das Koordinatenmessgerät 211 ist über ein Datenübertragungsnetz (durch Doppelpfeile angedeutet), an welches ein insbesondere verteilter Datenspeicher 6 angeschlossen ist, mit einer Auswertungseinrichtung 7 verbunden. Die Auswertungseinrichtung 7 weist die künstliche Intelligenz 8 auf.

Wenn eine Funktionsprüfung des Koordinatenmessgeräts 211 durchgeführt wird, werden Daten erzeugt, die optional nach einer Vorverarbeitung am Ort des Koordinatenmessgeräts 211 über das Datenübertragungsnetz übertragen werden. Die Daten werden vorzugsweise in dem Datenspeicher 6 gespeichert. Insbesondere wenn in dem Datenspeicher 6 bereits der für die künstliche Intelligenz 8 auswertbare Prüf-Datensatz gespeichert ist, kann die künstliche Intelligenz 8 auf den Datenspeicher 6 zugreifen und den Prüf-Datensatz in der in dieser Beschreibung beschriebenen Weise auswerten.

Zur Erzeugung des Prüf-Datensatzes weist zum Beispiel das Koordinatenmessgerät 211 eine Erzeugungseinrichtung 5 auf. Alternativ kann diese Erzeugungseinrichtung an einem anderen Ort angeordnet sein und dort aus den Rohdaten der Funktionsprüfung den Prüf-Datensatz erzeugen. Nicht in Fig. 6 dargestellt ist eine Erzeugungseinrichtung, die in vielen Fällen Teil des Koordinatenmessgeräts ist und die ausgestaltet ist, während eines Betriebes des Koordinatenmessgeräts automatisch Betriebssignale zu erzeugen, wobei die Betriebssignale Werten zumindest einer physikalischen Größe entsprechen, welche charakteristisch für den Betrieb der ersten Erzeugungseinrichtung und/oder des Koordinatenmessgeräts ist. Auf Beispiele einer solchen Erzeugungseinrichtung wurde bereits eingegangen.

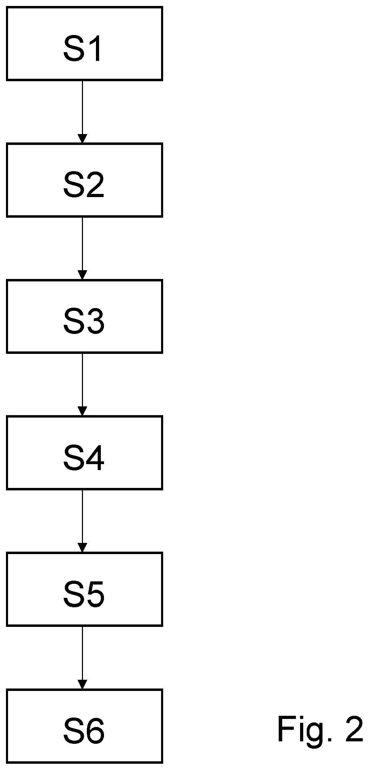

Bei der in Fig. 2 gezeigten Ausführungsform eines Verfahrens zum Prüfen der Funktionsfähigkeit eines KMG, zum Beispiel des KMG 211 aus Fig. 1, werden in Schritt S1 die Prüfung gestartet, im folgenden Schritt S2 der Prüf-Datensatz oder eine Mehrzahl der Prüf-Datensätze erzeugt, im folgenden optionalen Schritt S3 der Prüf-Datensatz oder die Prüf-Datensätze zu einer Datenspeichereinrichtung (wie zum Beispiel über das Internet zu einer Daten-Cloud) übertragen im folgenden Schritt S4 der Prüf-Datensatz mittels der Künstlichen Intelligenz einer Auswertungseinrichtung ausgewertet und im folgenden Schritt S5 das Ergebnis der Auswertung mit einer Aussage betreffend die Funktionsfähigkeit des Koordinatenmessgeräts ausgegeben.

Grundsätzlich kann die Auswertungseinrichtung entfernt von dem Koordinatenmessgerät angeordnet sein, in unmittelbarer Nähe des Koordinatenmessgeräts angeordnet sein oder als Teil des Koordinatenmessgeräts ausgestaltet sein. Insbesondere wenn die Auswertungseinrichtung entfernt von dem Koordinatenmessgerät angeordnet ist, kann die Auswertungseinrichtung über eine Datenübertragungsverbindung auf den zumindest einen Prüf-Datensatz zugreifen. Sie muss dabei den Prüf-Datensatz nicht vollständig abrufen, auch wenn dies je nach Ausgestaltung des Verfahrens möglich ist. Wenn der Prüf-Datensatz nicht vollständig abrufen wird, kann die Auswertungseinrichtung fortlaufend auf die jeweils für die Auswertung benötigten Daten des Prüf-Datensatzes zugreifen. Allerdings wird es bevorzugt, dass die Auswertungseinrichtung nicht am Ort des Koordinatenmessgeräts angeordnet ist, sondern entfernt davon, und lediglich auf die bereits zu einem von dem Koordinatenmessgerät entfernten Speicherort abgespeicherten Daten des zumindest einen Prüf-Datensatzes zugreift. In diesem Fall wird zum Beispiel der oben genannte optionale Schritt S3 aus Fig. 2 ausgeführt und die Auswertungseinrichtung greift während der Auswertung auf die in der Cloud gespeicherten Daten zu. Alternativ oder zusätzlich kann die Auswertungseinrichtung die Daten des zumindest einen Prüf-Datensatzes aus der Cloud bzw. von dem entfernt von dem Koordinatenmessgerät gelegenen Speicherort vollständig oder teilweise abrufen und dann erst mit der Auswertung beginnen.

Gleichwohl ist es auch möglich, dass die bei der Funktionsprüfung gewonnenen Daten auf andere Weise in die Ferne übertragen werden, zum Beispiel durch Abspeichern auf einem Datenträger und manuellen Transport des Datenträgers. In jedem Fall ist es möglich, aus den während der Funktionsprüfung gewonnenen Daten den auszuwertenden Prüf-Datensatz in dem von der KI auswertbaren Format am Ort des Koordinatenmessgeräts und/oder in der Ferne zu erstellen.

Vorteile der Übertragung des zumindest einen Prüf-Datensatzes an einen von dem Koordinatenmessgerät entfernten Speicherort sind die Möglichkeiten der gegen unbefugten Zugriff und/oder gegen Datenverlust sicheren Speicherung. Insbesondere können die Daten dort für lange Zeit archiviert werden und zur Auswertung zur Verfügung stehen. Dies ermöglicht es insbesondere, Prüf-Datensätze von an verschiedenen Orten angeordneten Koordinatenmessgeräten an dem genannten Speicherort zu sammeln. Sie stehen somit für einen Vergleich der Prüf-Datensätze typgleicher oder ansonsten vergleichbarer Koordinatenmessgeräte zur Verfügung. Insbesondere ist bei Vorhandensein der Zusatzinformationen, die insbesondere für jeden Prüf-Datensatz und/oder jedes geprüfte Koordinatenmessgerät jeweils zumindest eine Information über eine aus dem jeweiligen Prüf-Datensatz ermittelte Aussage über die Funktionsfähigkeit des Koordinatenmessgeräts enthalten, auch ein Vergleich der Zusatzinformationen und/oder ein Training einer künstlichen Intelligenz in der erfindungsgemäßen Weise möglich.

Wenn in der Figurenbeschreibung oder der Beschreibung von Ausführungsbeispielen und Ausgestaltungen von den Prüf-Datensätzen die Rede ist, dann impliziert dies, soweit sich aus der Beschreibung nichts anderes ergibt, auch das Vorhandensein der dem Prüf-Datensatz zugeordneten Zusatzinformation, sofern der jeweilige Prüf-Datensatz bereits ausgewertet wurde und auf diese Weise als Zusatzinformation das Ergebnis der Auswertung mit der Aussage über die Funktionsfähigkeit des Koordinatenmessgeräts zur Verfügung steht. In anderen Worten wird das Ergebnis der Auswertung zusammen oder datentechnisch verbunden mit dem Prüf-Datensatz abgespeichert. Zum Beispiel ist die Aussage eine Aussage über eine Veränderung des geprüften Koordinatenmessgeräts im Laufe der Zeit, wie zum Beispiel aufgrund von Abnutzung und sonstiger Beanspruchung von mechanischen und/oder elektrischen Einrichtungen des Koordinatenmessgeräts.

Wenn von der Künstlichen Intelligenz auf Basis ihres Trainings für einen oder mehrere Prüf-Datensätze eine solche Veränderung festgestellt wird, wird vorzugsweise nicht nur die Veränderung selbst festgestellt, sondern von der Künstlichen Intelligenz aufgrund ihres Trainings auch eine Aussage über einen Fehlertyp (z.B. abgenutzte Bürsten eines Antriebsmotors, abgenutzte Lager eines Antriebs, abgenutzte Federung eines Messkopfes, nicht durchgeführte oder zu wiederholende Einstellung oder Kalibrierung einer Einrichtung des Koordinatenmessgeräts, zeitliche Veränderung von mechanischen Teilen des Koordinatenmessgeräts - beispielsweise Antriebsriemen oder Luftlagern - und die damit erforderliche Nachjustierung von Parametern, Verschmutzung der Messysteme) getroffen und ausgegeben. Es ist daher beim Training in diesem Fall erforderlich, dass die Trainings-Datensätze in der zugeordneten Zusatzinformation ebenfalls Aussagen über Fehlertypen enthalten.

Wie bereits beschrieben, können die Prüf-Datensätze jeweils Daten aufweisen, die eine Abhängigkeit zumindest einer physikalischen Größe von zumindest einer Ordnungsgröße enthalten und daher als zwei- oder mehrdimensionale Diagramme darstellbar sind. Ferner wurde bereits beschrieben, dass die Künstliche Intelligenz beim Auswerten des jeweiligen Prüf-Datensatzes unter Berücksichtigung von Diagramm-Merkmalen zumindest eines Diagramms der Abhängigkeit der physikalischen Größe von einer Ordnungsgröße des Prüf-Datensatzes soweit möglich eine Entsprechung oder eine Ähnlichkeit des Prüf-Datensatzes zu einer durch die Trainings-Datensätze festgehaltenen Prüfungssituation ermittelt und die Aussage betreffend die Funktionsfähigkeit des Koordinatenmessgeräts entsprechend der durch die Trainings-Datensätze festgehaltenen entsprechenden oder ähnlichen Prüfungssituation ableitet. Kurz gesagt, leitet die Künstliche Intelligenz aus dem Erlernten unter Berücksichtigung der Diagramm-Merkmale die Aussage betreffend die Funktionsfähigkeit ab. Da es sich um eine Künstliche Intelligenz handelt gehen deren Fähigkeiten über die Identifizierung eines ähnlichen oder ähnlichsten Trainings-Datensatzes hinaus. Vielmehr muss die Künstliche Intelligenz bei der Auswertung des Prüf-Datensatzes keinen Zugriff mehr auf die Trainings-Datensätze haben.

Vorzugsweise ist aber nicht nur der zumindest eine Prüf-Datensatz, sondern werden und/oder sind die Trainings-Datensätze auch so ausgestaltet, dass sie beim Training der Künstlichen Intelligenz hinsichtlich von Diagramm-Merkmalen der Abhängigkeit der zumindest einen physikalischen Größe von zumindest einer Ordnungsgröße auswertbar sind. Zum Beispiel sind daher in allen Datensätzen Werte derselben physikalischen Größe in Abhängigkeit von derselben Ordnungsgröße enthalten und sind die in den jeweiligen Datensätzen enthaltenen Abhängigkeiten der physikalischen Größe von der Ordnungsgröße gleich formatiert und/oder die Größen sind gleich skaliert oder die Datensätze enthalten jeweils die Information über die unter Umständen unterschiedliche Skalierung. Es ist jedoch auch möglich, die verschieden skalierten Trainings-Datensätze insbesondere durch numerische Verfahren zunächst zu normieren. Beispielsweise können Datenreihen durch Interpolation mit äquidistanten Stützstellen versehen werden, um eine Vergleichbarkeit herzustellen.

Wenn noch kein zu einem Prüf-Datensatz vergleichbarer Datensatz vorhanden ist, kann der Prüf-Datensatz zum ersten Vergleichs-Datensatz für den Vergleich weiterer Prüf-Datensätze werden. In diesem Fall wird bevorzugt, dass ein menschlicher Experte den Prüf-Datensatz auswertet und ihm die Aussage über die Funktionsfähigkeit des geprüften Koordinatenmessgeräts zuordnet. Bei einer ausreichenden Anzahl von solchen Vergleichs-Datensätzen mit Zusatzinformationen können diese als Trainings-Datensätze genutzt werden, um die Künstliche Intelligenz zu trainieren.

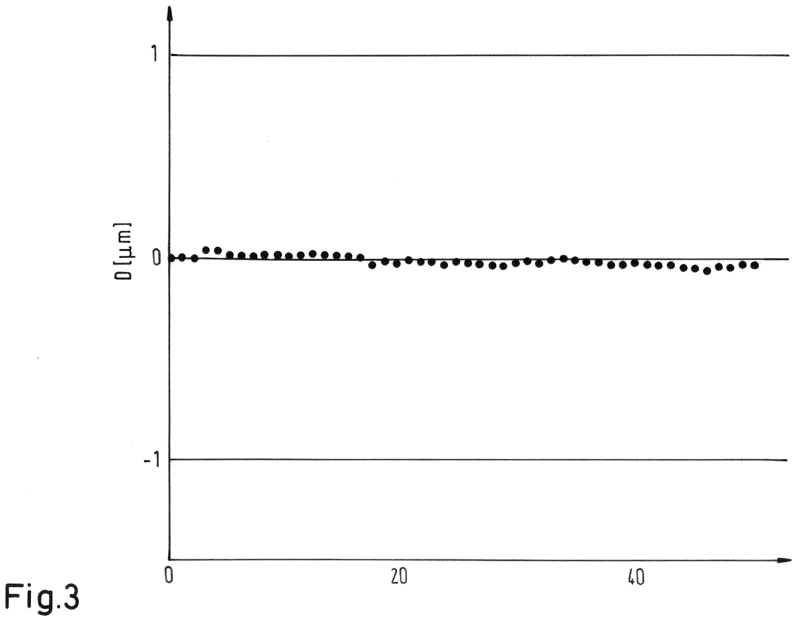

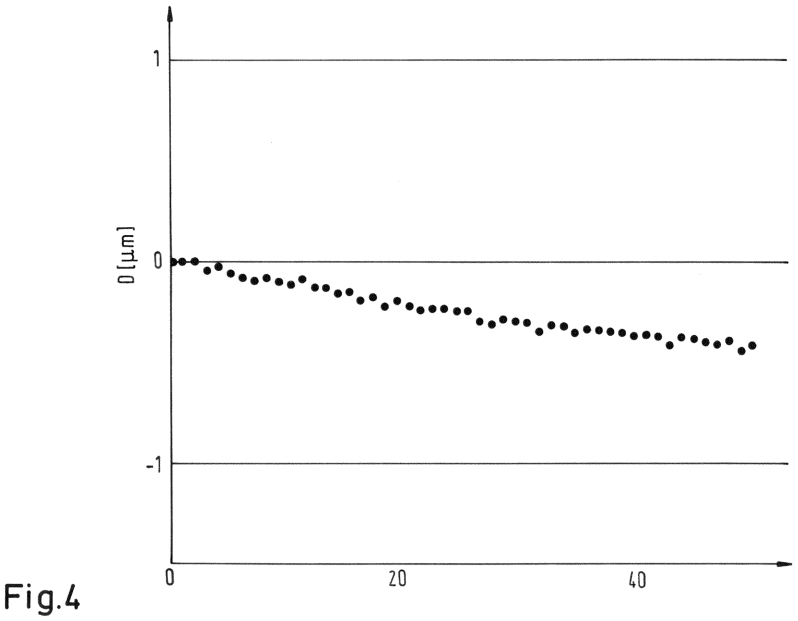

Fig. 3 und Fig. 4 zeigen für die oben bereits erläuterte physikalische Größe der Antastabweichung jeweils ein Diagramm, das einem Prüf-Datensatz entspricht, aber auch einem Trainings-Datensatz entsprechen kann. Dargestellt sind jeweils fünfzig Werte der Antastabweichung, die in Abhängigkeit ihrer Kennzahl aufgetragen sind. Die Kennzahl kann insbesondere der Reihenfolge der Antastungen der Oberfläche eines Werkstücks (insbesondere eines Prüfmerkmals) entsprechen, bei der die Koordinatenmesswerte für die Feststellung der Antastabweichung gemessen wurden. Idealerweise liegen sämtliche Antastabweichungen bei dem Wert null, d.h. es ist kein Unterschied zwischen dem Soll-Wert und dem Ist-Wert der Antastung festzustellen.

Im Fall des Diagramms der Fig. 3 sind die Antastabweichungen nahe null. Durch jeweils zwei horizontale Linien in den Diagrammen der Fig. 3 und Fig. 4 sind Grenzwerte für maximal zulässige Antastabweichungen dargestellt. Im Ausführungsbeispiel liegen diese Grenzwerte bei 1 Mikrometer und -1 Mikrometer.

Im Fall des Diagramms der Fig. 4 unterschreiten die Antastabweichungen (d.h. deren Werte) ebenfalls nicht den unteren Grenzwert. Sie weisen aber eine fallende Tendenz auf. In diesem Ausführungsbeispiel sind die Kennzahlen der Antastabweichungen in der Reihenfolge der durchgeführten Antastungen des Werkstücks geordnet. Die fallende Tendenz weist daher darauf hin, dass mit fortschreitendem Ablauf der Antastungen eine insgesamt (hinsichtlich ihres Betrages) immer größer werdende Antastabweichung auftritt.

Auch diese fallende Tendenz kann die Künstliche Intelligenz nach einem Training mit entsprechenden Trainings-Datensätzen, die ebenfalls derartige Tendenzen aufweisen und denen entsprechende Zusatzinformationen mit Aussagen über solche Tendenzen zugeordnet sind, erkennen.

Insbesondere kann die Künstliche Intelligenz bei der Auswertung des Prüf-Datensatzes, der die Information über das Diagramm aus Fig. 3 oder Fig. 4 enthält, wie folgt vorgehen:
Die Daten des Prüf-Datensatzes, welche die Information über die Abhängigkeit der Antastabweichung von der Kennzahl enthalten, werden in Bilddaten umgewandelt. Dabei werden Daten erzeugt, die den in Fig. 3 bzw. Fig. 4 dargestellten Punkten entsprechen. Jeder Bildpunkt wird beispielsweise durch eine x-Koordinate und eine y-Koordinate definiert. Dabei entsprechen die x-Koordinate der Kennzahl, bzw. dem Antastabstand, und die y-Koordinate dem Wert der Antastabweichung.

In dem folgenden Schritt prüft die KI auf Basis ihres Trainings anhand der Bilddaten, ob sie eine Prüfungssituation erkennt, für die ihr bereits eine zugeordnete Aussage über die Funktionsfähigkeit des Koordinatenmessgeräts bekannt ist. Mögliche Aussagen sind der in dem Prüf-Datensatz enthaltenen Abhängigkeit dieser konkreten physikalischen Größe (hier der Antastabweichung) in Abhängigkeit von der Ordnungsgröße (hier der Kennzahl entsprechend der Reihenfolge der Antastungen) zugeordnet. Wenn weitere Prüf-Datensätze mit anderen Abhängigkeiten von physikalischen Größen vorhanden sind, dann sind diesen Abhängigkeiten ebenfalls mögliche Aussagen über die Funktionsfähigkeit wie zum Beispiel im Fall des Schleppabstandes "Schleppabstand in Ordnung" oder "Schleppabstand zu groß" oder "Schleppabstand tendiert mit fortschreitender Zeit größer zu werden" zugeordnet.

Wenn die KI eine Prüfungssituation mit einer ihr bekannten zugeordneten Aussage über die Funktionsfähigkeit des Koordinatenmessgeräts erkannt hat, gibt sie diese Aussage aus, zum Beispiel indem sie die Aussage dem Prüf-Datensatz zuordnet und abspeichert.

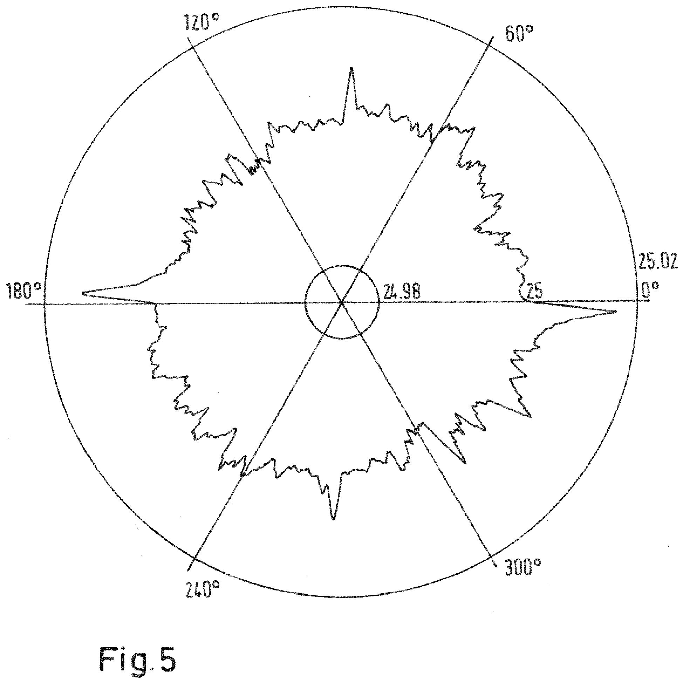

Fig. 5 zeigt ein Diagramm entsprechend einem weiteren Prüf-Datensatz, der Daten aus der Durchführung eines weiteren Funktionstests enthält, nämlich dem Test, inwieweit ein Koordinatenmessgerät in der Lage ist, ein bewegliches Teil wie beispielsweise einen Taststift auf einer idealen Kreisbahn zu bewegen. Im Ausführungsbeispiel soll daher geprüft werden, inwieweit eine ideale Kreisbahn in einer x-z-Ebene des Koordinatensystems des Koordinatenmessgeräts ausgeführt werden kann. Die Achsenbezeichnungen eines solchen Koordinatensystems wurden anhand von Fig. 1 für ein Beispiel eines Koordinatenmessgeräts beschrieben. Zum Beispiel kann die Tastkugel 121 des Koordinatenmessgeräts 211 aus Fig. 1 zur Ausführung des Tests auf einer solchen Kreisbahn bewegt werden. Dabei werden die entsprechenden Antriebe für die Bewegung in x-Richtung und z-Richtung betrieben und die entsprechenden Werte des Positionsmesssystems des Koordinatenmessgeräts 211 ausgelesen.

Das Diagramm in Fig. 5 zeigt die Abweichung von der idealen Kreisbahn mit dem Radius "25", wobei die Abweichungen bei der gewählten Skalierung des Diagramms zwischen dem Radius "24,98" und dem Radius "25,02" darstellbar sind. Diese Abweichungen sind in Abhängigkeit des Winkels im Bereich zwischen 0 Grad und 360 Grad (d.h. über einen Umlauf des beweglichen Teils um das Zentrum des Kreises) aufgetragen. Die dargestellte Linie entspricht einer Bewegung des beweglichen Teils entlang dem idealen Kreis in einer ersten Richtung, nämlich im Uhrzeigersinn. In der Praxis wird die Kreisbewegung auch in der entgegengesetzten Richtung ausgeführt und basiert der Test auch auf der entsprechenden zweiten Bewegungskurve.

Man erkennt, dass es größere Abweichungen hin zu einem größeren Radius gibt als Abweichungen hin zu einem kleineren Radius als "25". Ungefähr bei den Winkeln 0 Grad und 180 Grad treten die größten Beträge von Abweichungen auf. Ebenfalls größere Beträge von Abweichungen treten bei den Winkeln 90 Grad und 270 Grad auf. Darauf wird noch näher eingegangen.

Wiederum kann die Künstliche Intelligenz ausgestaltet sein, aus dem Prüf-Datensatz Bilddaten zu erzeugen, die der anhand von Fig. 5 beschriebenen Abhängigkeit entsprechen. Beispielsweise werden die Bildpunkte, welche auf der in Fig. 5 dargestellten Umlaufbahn liegen, durch die Koordinaten "Radius" (d. h. Abstand vom Kreismittelpunkt) und "Winkel in Umlaufrichtung" beschrieben. Dabei ist es sowohl möglich, dass die Winkelkoordinate in dem erzeugten Bild eine Koordinate entlang einer geradlinigen Koordinatenachse ist, als auch (ähnlich wie in Fig. 5) alternativ als Winkelkoordinate dargestellt wird.

Falls die KI eine Prüfungssituation mit einer ihr bekannten zugeordneten Aussage über die Funktionsfähigkeit des Koordinatenmessgeräts erkannt hat, gibt sie diese Aussage wie im Fall der Fig. 3 oder Fig. 4 aus, zum Beispiel die Aussage "maximale Abweichung des Radius vom Soll-Wert in Ordnung" oder "maximale Abweichung des Radius vom Soll-Wert liegt bei der Winkelposition alpha_0" oder "Antrieb der x-Achse ist neu einzustellen".

Zusätzlich sind die Abweichungen ("Nasen") von der idealen Kreisbahn an den Umkehrpunkten der Bewegung bezüglich einer der linearen Bewegungsachsen, also bei 0°, 90°, 180° und 270°, von Interesse und können z. B. gesondert von der KI betrachtet werden. Diese Stellen entsprechen einem Nulldurchgang in der Geschwindigkeit der jeweiligen Achse mit Umkehrung der Bewegung. Kurz vor diesen Umkehrpunkten wird die Geschwindigkeit einer Achse immer kleiner, wird zu einem kurzen Zeitpunkt Null und ändert dann die Richtung. Zum Zeitpunkt des Nulldurchgangs treten (Haft-) Reibungseffekte und Hystereseeffekte verstärkt auf, was sich in den oben bereits erwähnten größeren Abweichungen der Bewegung zu der idealen Kreisbewegung im Bereich dieser Stellen äußert. Man erkennt an der in Fig. 5 dargestellten Kurve, dass es sich um eine Kreisbewegung im Uhrzeigersinn handelt, da die "Nasen" im Uhrzeigersinn nach den Nullurchgängen der Geschwindigkeit bei 0°, 90°, 180° und 270° auftreten.

Nun ist es die Aufgabe der KI, die Regelparameter zur Regelung der Antriebe des KMG so zu optimieren, dass diese Effekte reduziert werden und somit die Abweichungen von der idealen Kreisbahn minimiert werden.

Dem Fachmann sind weitere Funktionstests zur Prüfung der Funktionsfähigkeit eines Koordinatenmessgeräts bekannt. Bekannt ist dabei auch die jeweilige physikalische Größe, die bei der Durchführung des Tests gemessen und aufgezeichnet wird, in Abhängigkeit einer Ordnungsgröße je nach Art des Tests. Für alle diese Abhängigkeiten einer physikalischen Größe lässt sich ein Diagramm darstellen und lassen sich Bilddaten erzeugen, durch die die Werte der physikalischen Größe insbesondere mittels der Koordinaten in Bezug auf ein zweidimensionales oder mehrdimensionales Diagramm definiert sind. Die KI kann die Koordinaten berechnen oder die Koordinaten sind bereits in dem Prüf-Datensatz enthalten. Anstelle der KI können die Koordinaten auch von einer separaten Recheneinrichtung, zum Beispiel realisiert durch Software auf einem Computer, berechnet werden. Zum Beispiel kann der Prüf-Datensatz daher vorverarbeitet werden, bevor die KI ihn auswertet.

Nach Durchführung aller beabsichtigten Funktionstests und Auswertung durch die KI kann eine Gesamtaussage über den Gesundheitszustand des Koordinatenmessgeräts erzeugt werden. Die Vorgehensweise bei der Erzeugung der Gesamtaussage kann vorgegeben sein. Zum Beispiel kann vorgegeben sein, dass die Aussage "das Koordinatenmessgerät ist gesund" (d. h. es ist voll funktionsfähig) nur dann erzeugt und ausgegeben wird, wenn alle einzelnen Funktionstests bestanden wurden. Optional kann informativ hinzugefügt werden, dass eine Wartung und/oder Einstellung des Koordinatenmessgeräts innerhalb eines bestimmten Zeitraums ab der Durchführung der Funktionsprüfung empfohlen wird.

Die beschriebene Verwendung einer Künstlichen Intelligenz ermöglicht es, auf den Einsatz eines menschlichen Experten mit großer Erfahrung in der Prüfung der Funktionsfähigkeit von Koordinatenmessgeräten vor Ort meistens zu verzichten. Dies gilt insbesondere dann, wenn durch den Betreiber des Koordinatenmessgeräts die Durchführung der Funktionsprüfung selbst begonnen wird oder die Durchführung der Funktionsprüfung aus der Ferne erlaubt wird und der bei der Funktionsprüfung erzeugte zumindest eine Prüf-Datensatz von dem Ort des Koordinatenmessgeräts in die Ferne (zum Beispiel über das Internet) übertragen wird, damit die KI darauf zugreifen kann. Insbesondere kann daher aus der Ferne die Funktionsprüfung begonnen und soweit erforderlich ihre Ausführung gesteuert werden. Dann kann die KI ebenfalls aus der Ferne oder in der Ferne den zumindest einen erzeugten Prüf-Datensatz auswerten und automatisch die gewünschte Aussage über die Funktionsfähigkeit des Koordinatenmessgeräts erzeugen. Auf diese Weise kann zum Beispiel entschieden werden, ob und inwieweit eine Wartung und/oder eine Einstellung des Koordinatenmessgeräts erforderlich ist.

Auch das Training der Künstlichen Intelligenz kann automatisiert erfolgen, zum Beispiel gesteuert durch Software, und wiederholt werden, wenn ausgewertete Prüf-Datensätze mit den genannten Zusatzinformationen zu den bisher bereits für das Training der KI verwendeten Trainings-Datensätze hinzugefügt worden sind. Dennoch ist es möglich, dass zumindest ein Experte die von der KI vorgenommene Auswertung zumindest stichprobenartig überprüft und in begründeten Fällen korrigiert. Von Vorteil ist dabei, dass die in den Prüf-Datensätzen enthaltenen Daten über die Abhängigkeiten der jeweiligen physikalischen Größe(n) als Diagramm darstellbar sind und insbesondere Bilddaten erzeugt wurden, die auf einfache Weise und kurzfristig zum Beispiel auf einem Computerbildschirm darstellbar sind. Die KI und der menschliche Experte beurteilen daher die Prüf-Datensätze auf der Grundlage derselben Informationen. Ferner ist die Auswertung anhand von Diagramm-Merkmalen, insbesondere Bilddaten, sowohl für die KI als auch den menschlichen Experten einfach und übersichtlich. Auch die KI kann anhand von Bilddaten Unterschiede und Gemeinsamkeiten zu Vergleichsdaten besonders gut erfassen.

Insgesamt wird die Auswertung von Prüf-Datensätzen aus der Funktionsprüfung eines Koordinatenmessgeräts daher objektiviert, im Gegensatz zu der subjektiven Auswertung eines menschlichen Servicetechnikers oder Betreibers. Die Auswertung kann standardisiert werden und erfolgt automatisch. Ferner können automatisch standardisierte Empfehlungen zu Wartung, Einstellung und Betrieb des geprüften Koordinatenmessgeräts erzeugt werden. Die von Servicetechnikern aufgewendete Zeit kann reduziert werden, sowohl in Bezug auf die Durchführung und Auswertung der Funktionsprüfung als auch in Bezug auf die Fahrt zum Ort des Koordinatenmessgeräts.

Ferner können Prüf-Datensätze mit den genannten Zusatzinformationen über die daraus festgestellte Funktionsfähigkeit oder Nicht-Funktionsfähigkeit eines Koordinatenmessgeräts gesammelt werden. Dies erlaubt nicht nur das Training einer Künstlichen Intelligenz sondern auch andere Vergleiche. Insbesondere können die zu verschiedenen Zeitpunkten gewonnenen Prüf-Datensätze aus der wiederholten Funktionsprüfung desselben Koordinatenmessgeräts hinsichtlich ihrer zeitlichen Abfolge ausgewertet werden. Wenn diese Ergebnisse der Auswertung oder zusätzliche Auswertungen dem Betreiber des Koordinatenmessgeräts zur Verfügung gestellt werden, ist der Betreiber besser als bei der konventionellen Vorgehensweise über den Zustand seines Koordinatenmessgeräts informiert. Er kann automatisiert Informationen über die Abnutzung und Beanspruchung der Hardware sowie Hinweise auf empfehlenswerte Maßnahmen erhalten.

Da ein Betreiber aufgrund der Softwarelösung die Daten selbst erfassen kann und die Daten automatisiert senden und ausgewertet werden können, ist kein Techniker vor Ort erforderlich und der gesamte Vorgang kann in kürzerer Zeit erfolgen. Damit ist es für den Betreiber möglich, eine Diagnose und eine Handlungsempfehlung innerhalb weniger Minuten nach der Erfassung der Daten zu erhalten.

## Patentansprüche

1. Verfahren zum Prüfen einer Funktionsfähigkeit eines Koordinatenmessgeräts (211), mit folgenden Schritten:
- Betreiben des Koordinatenmessgeräts (211) und automatisches Erfassen von Betriebssignalen, die von zumindest einer ersten Erzeugungseinrichtung, die Teil des Koordinatenmessgeräts (211) ist oder eine zusätzliche Erzeugungseinrichtung ist, während des Betriebs erzeugt werden und die Werten zumindest einer physikalischen Größe entsprechen, welche charakteristisch für den Betrieb des Koordinatenmessgeräts (211) ist,
- automatisches Erzeugen eines Prüf-Datensatzes aus den erfassten Betriebssignalen und automatisches Übertragen des Prüf-Datensatzes zu einer Auswertungseinrichtung (7), die eine Künstliche Intelligenz (8) aufweist,
- Auswerten des Prüf-Datensatzes mittels der Künstlichen Intelligenz (8) durch die Auswertungseinrichtung (7), wobei die Künstliche Intelligenz (8) auf Basis eines Trainings unter Verwendung von Trainings-Datensätzen mit zugeordneten Zusatzinformationen, die jeweils zumindest eine Information über eine aus dem jeweiligen Trainings-Datensatz ermittelbare Funktionsfähigkeit des Koordinatenmessgeräts (211) oder eines vergleichbaren Koordinatenmessgeräts (211) enthalten, in einem betriebsfertigen Zustand ist und wobei die Künstliche Intelligenz (8) aus dem Prüf-Datensatz eine Aussage betreffend die Funktionsfähigkeit des Koordinatenmessgeräts (211) ableitet,
- Ausgeben der Aussage betreffend die Funktionsfähigkeit des Koordinatenmessgeräts (211).
wobei der Prüf-Datensatz und die Trainings-Datensätze die Werte der zumindest einen physikalischen Größe in Abhängigkeit von einer Ordnungsgröße aufweisen und wobei die Künstliche Intelligenz (8) beim Auswerten des Prüf-Datensatzes auf Basis ihres Trainings unter Berücksichtigung von Diagramm-Merkmalen zumindest eines Diagramms der Abhängigkeit der physikalischen Größe von einer Ordnungsgröße des Prüf-Datensatzes
a) eine Entsprechung oder eine Ähnlichkeit des Prüf-Datensatzes zu einer durch die Trainings-Datensätze festgehaltenen Prüfungssituation ermittelt oder
b) feststellt, dass es keine Entsprechung oder Ähnlichkeit des Prüf-Datensatzes zu einer durch die Trainings-Datensätze festgehaltenen Prüfungssituation gibt, und
im Fall a) die Aussage betreffend die Funktionsfähigkeit des Koordinatenmessgeräts (211) entsprechend der durch die Trainings-Datensätze festgehaltenen entsprechenden oder ähnlichen Prüfungssituation ableitet,
**dadurch gekennzeichnet, dass**
die physikalische Größe oder zumindest eine der physikalischen Größen
- ein wiederholt und/oder kontinuierlich gemessener Motorstrom eines Antriebs des Koordinatenmessgeräts (211) ist und die Ordnungsgröße eine Zeit oder eine Indexgröße ist,
- eine Antastabweichung zwischen einer von einem Positionsmesssystem des Koordinatenmessgeräts (211) ermittelten Ist-Position eines beweglichen Teils des Koordinatenmessgeräts (211) zu einer Soll-Position ist, wobei die Ist-Position jeweils einer optischen oder taktilen Antastung einer Oberfläche eines Werkstücks mittels eines Sensors des Koordinatenmessgeräts entspricht und wobei die Ordnungsgröße eine Reihenfolge der Antastungen betrifft oder eine Indexgröße zur Unterscheidung der wiederholt gewonnenen Werte der Abweichung ist,
- eine Abweichung einer Bewegung eines beweglichen Teils des Koordinatenmessgeräts (211) von einer idealen Kreisbahn ist, wobei die Abweichung der Bewegung von einem Winkel im Bereich zwischen 0 Grad und 360 Grad, d.h. über einen Umlauf des beweglichen Teils um das Zentrum des Kreises, abhängt, oder
- ein Antastverhalten eines aktiven Messkopfes (205) mit taktilem Taster (111) beschreibt, wobei das Antastverhalten eine Bewegung des Tasters an eine Oberfläche eines Werkstücks bis zu einem taktilen Kontakt des Tasters mit der Oberfläche betrifft und wobei eine Auslenkung des Tasters relativ zu einem Referenzpunkt des Messkopfes während der Bewegung und auch ab Herstellung des taktilen Kontakts zur Beschreibung des Antastverhaltens gemessen wird indem Messwerte eines Positionsmesssystems des Messkopfes fortlaufend aufgenommen werden.

2. Verfahren nach Anspruch 1, wobei das Training der Künstlichen Intelligenz (8) unter Verwendung der Trainings-Datensätze mit den zugeordneten Zusatzinformationen Teil des Verfahrens ist.

3. Anordnung zum Prüfen einer Funktionsfähigkeit eines Koordinatenmessgeräts (211), aufweisend:
- zumindest eine erste Erzeugungseinrichtung, die ausgestaltet ist, während eines Betriebes des Koordinatenmessgeräts (211) automatisch Betriebssignale zu erzeugen, wobei die Betriebssignale Werten zumindest einer physikalischen Größe entsprechen, welche charakteristisch für den Betrieb des Koordinatenmessgeräts (211) ist,
- eine zweite Erzeugungseinrichtung (5), die die erste Erzeugungseinrichtung oder eine andere Einrichtung ist und die ausgestaltet ist, automatisch einen Prüf-Datensatz aus den erfassten Betriebssignalen zu erzeugen und automatisch den Prüf-Datensatz zu einer Auswertungseinrichtung (7) zu übertragen,
- die Auswertungseinrichtung (7), die eine Künstliche Intelligenz (8) aufweist,
wobei die Auswertungseinrichtung (7) ausgestaltet ist, den Prüf-Datensatz mittels der Künstlichen Intelligenz (8) auszuwerten, wobei die Künstliche Intelligenz (8) auf Basis eines Trainings unter Verwendung von Trainings-Datensätzen mit zugeordneten Zusatzinformationen, die jeweils zumindest eine Information über eine aus dem jeweiligen Trainings-Datensatz ermittelbare Funktionsfähigkeit des Koordinatenmessgeräts (211) oder eines vergleichbaren Koordinatenmessgeräts (211) enthalten, in einem betriebsfertigen Zustand ist und wobei die Künstliche Intelligenz (8) ausgestaltet ist, aus dem Prüf-Datensatz eine Aussage betreffend die Funktionsfähigkeit des Koordinatenmessgeräts (211) abzuleiten,
wobei der Prüf-Datensatz und die Trainings-Datensätze die Werte der zumindest einen physikalischen Größe in Abhängigkeit von einer Ordnungsgröße aufweisen und wobei die Künstliche Intelligenz (8) ausgestaltet ist, beim Auswerten des Prüf-Datensatzes auf Basis ihres Trainings unter Berücksichtigung von Diagramm-Merkmalen zumindest eines Diagramms der Abhängigkeit der physikalischen Größe von einer Ordnungsgröße des Prüf-Datensatzes
a) eine Entsprechung oder eine Ähnlichkeit des Prüf-Datensatzes zu einer durch die Trainings-Datensätze festgehaltenen Prüfungssituation zu ermitteln oder
b) festzustellen, dass es keine Entsprechung oder Ähnlichkeit des Prüf-Datensatzes zu einer durch die Trainings-Datensätze festgehaltenen Prüfungssituation gibt, und
im Fall a) die Aussage betreffend die Funktionsfähigkeit des Koordinatenmessgeräts (211) entsprechend der durch die Trainings-Datensätze festgehaltenen entsprechenden oder ähnlichen Prüfungssituation abzuleiten,
**dadurch gekennzeichnet, dass**
die physikalische Größe oder zumindest eine der physikalischen Größen
- ein wiederholt und/oder kontinuierlich gemessener Motorstrom eines Antriebs des Koordinatenmessgeräts (211) ist und die Ordnungsgröße eine Zeit oder eine Indexgröße ist,
- eine Antastabweichung zwischen einer von einem Positionsmesssystem des Koordinatenmessgeräts (211) ermittelten Ist-Position eines beweglichen Teils des Koordinatenmessgeräts (211) zu einer Soll-Position ist, wobei die Ist-Position jeweils einer optischen oder taktilen Antastung einer Oberfläche eines Werkstücks mittels eines Sensors des Koordinatenmessgeräts entspricht und wobei die Ordnungsgröße eine Reihenfolge der Antastungen betrifft oder eine Indexgröße zur Unterscheidung der wiederholt gewonnenen Werte der Abweichung ist,
- eine Abweichung einer Bewegung eines beweglichen Teils des Koordinatenmessgeräts (211) von einer idealen Kreisbahn ist, wobei die Abweichung der Bewegung von einem Winkel im Bereich zwischen 0 Grad und 360 Grad, d.h. über einen Umlauf des beweglichen Teils um das Zentrum des Kreises, abhängt, oder
- ein Antastverhalten eines aktiven Messkopfes (205) mit taktilem Taster (111) beschreibt, wobei das Antastverhalten eine Bewegung des Tasters an eine Oberfläche eines Werkstücks bis zu einem taktilen Kontakt des Tasters mit der Oberfläche betrifft und wobei eine Auslenkung des Tasters relativ zu einem Referenzpunkt des Messkopfes während der Bewegung und auch ab Herstellung des taktilen Kontakts zur Beschreibung des Antastverhaltens gemessen wird indem Messwerte eines Positionsmesssystems des Messkopfes fortlaufend aufgenommen werden.

4. Anordnung nach Anspruch 3, wobei die Anordnung eine Trainingseinrichtung aufweist, die ausgestaltet ist das Training der Künstlichen Intelligenz (8) unter Verwendung der Trainings-Datensätze mit den zugeordneten Zusatzinformationen durchzuführen.

## Claims

1. Method for testing a functionality of a coordinate measuring machine (211), having the following steps of:
- operating the coordinate measuring machine (211) and automatically capturing operating signals which are generated during operation by at least one first generating device, which is part of the coordinate measuring machine (211), or an additional generating device and correspond to values of at least one physical variable characteristic of the operation of the coordinate measuring machine (211),
- automatically generating a test data set from the captured operating signals and automatically transmitting the test data set to an evaluation device (7) which has artificial intelligence (8),
- evaluating the test data set by means of the evaluation device (7) using the artificial intelligence (8), wherein the artificial intelligence (8) is in a ready-to-use state on the basis of training using training data sets with associated additional information, which each contain at least one item of information about a functionality of the coordinate measuring machine (211) or a comparable coordinate measuring machine (211) that can be determined from the respective training data set, and wherein the artificial intelligence (8) derives a statement regarding the functionality of the coordinate measuring machine (211) from the test data set,
- outputting the statement regarding the functionality of the coordinate measuring machine (211), wherein the test data set and the training data sets have the values of the at least one physical variable in dependence on an ordinal variable, and wherein the artificial intelligence (8), when evaluating the test data set on the basis of its training taking into account diagram features of at least one diagram of the dependence of the physical variable on an ordinal variable of the test data set,
a) determines a correspondence or a similarity of the test data set to a test situation recorded by the training data sets, or
b) determines that there is no correspondence or similarity between the test data set and a test situation recorded by the training sets, and
in case a), derives the statement regarding the functionality of the coordinate measuring machine (211) according to the corresponding or similar test situation recorded by the training data sets,
**characterized in that** the physical variable or at least one of the physical variables
- is a repeatedly and/or continuously measured motor current of a drive of the coordinate measuring machine (211), and the ordinal variable is a time or an index variable,
- is a probing deviation between an actual position of a moving part of the coordinate measuring machine (211) determined by a position measuring system of the coordinate measuring machine (211) and a target position, wherein the actual position corresponds in each case to optical or tactile probing of a surface of a workpiece by means of a sensor of the coordinate measuring machine, and wherein the ordinal variable relates to a sequence of the probing operations or is an index variable for distinguishing the repeatedly obtained values of the deviation,
- is a deviation of a movement of a moving part of the coordinate measuring machine (211) from an ideal circular path, wherein the deviation of the movement depends on an angle in the range between 0 degrees and 360 degrees, i.e. over one rotation of the moving part around the centre of the circle, or
- describes a probing behaviour of an active measuring head (205) with a tactile probe (111), wherein the probing behaviour relates to a movement of the probe to a surface of a workpiece up to tactile contact of the probe with the surface, and wherein a deflection of the probe relative to a reference point of the measuring head is measured, during the movement and also from the production of the tactile contact, for describing the probing behaviour, by continuously recording measured values of a position measuring system of the measuring head.

2. Method according to Claim 1, wherein the training of the artificial intelligence (8) using the training data sets with the associated additional information is part of the method.

3. Arrangement for testing a functionality of a coordinate measuring machine (211), comprising:
- at least one first generating device which is configured to automatically generate operating signals during operation of the coordinate measuring machine (211), wherein the operating signals correspond to values of at least one physical variable characteristic of the operation of the coordinate measuring machine (211),
- a second generating device (5) which is the first generating device or another device and is configured to automatically generate a test data set from the captured operating signals and to automatically transmit the test data set to an evaluation device (7),
- the evaluation device (7) which has artificial intelligence (8),
wherein the evaluation device (7) is configured to evaluate the test data set using the artificial intelligence (8), wherein the artificial intelligence (8) is in a ready-to-use state on the basis of training using training data sets with associated additional information, which each contain at least one item of information about a functionality of the coordinate measuring machine (211) or a comparable coordinate measuring machine (211) that can be determined from the respective training data set, and wherein the artificial intelligence (8) is configured to derive a statement regarding the functionality of the coordinate measuring machine (211) from the test data set,
wherein the test data set and the training data sets have the values of the at least one physical variable in dependence on an ordinal variable, and wherein the artificial intelligence (8) is configured, when evaluating the test data set on the basis of its training taking into account diagram features of at least one diagram of the dependence of the physical variable on an ordinal variable of the test data set,
a) to determine a correspondence or a similarity of the test data set to a test situation recorded by the training data sets, or
b) to determine that there is no correspondence or similarity between the test data set and a test situation recorded by the training sets, and
in case a), to derive the statement regarding the functionality of the coordinate measuring machine (211) according to the corresponding or similar test situation recorded by the training data sets,
**characterized in that** the physical variable or at least one of the physical variables
- is a repeatedly and/or continuously measured motor current of a drive of the coordinate measuring machine (211), and the ordinal variable is a time or an index variable,
- is a probing deviation between an actual position of a moving part of the coordinate measuring machine (211) determined by a position measuring system of the coordinate measuring machine (211) and a target position, wherein the actual position corresponds in each case to optical or tactile probing of a surface of a workpiece by means of a sensor of the coordinate measuring machine, and wherein the ordinal variable relates to a sequence of the probing operations or is an index variable for distinguishing the repeatedly obtained values of the deviation,
- is a deviation of a movement of a moving part of the coordinate measuring machine (211) from an ideal circular path, wherein the deviation of the movement depends on an angle in the range between 0 degrees and 360 degrees, i.e. over one rotation of the moving part around the centre of the circle, or
- describes a probing behaviour of an active measuring head (205) with a tactile probe (111), wherein the probing behaviour relates to a movement of the probe to a surface of a workpiece up to tactile contact of the probe with the surface, and wherein a deflection of the probe relative to a reference point of the measuring head is measured, during the movement and also from the production of the tactile contact, for describing the probing behaviour, by continuously recording measured values of a position measuring system of the measuring head.

4. Arrangement according to Claim 3, wherein the arrangement has a training device which is configured to train the artificial intelligence (8) using the training data sets with the associated additional information.

## Revendications

1. Procédé de vérification d'une aptitude au fonctionnement d'un appareil de mesure de coordonnées (211), comprenant les étapes suivantes consistant à :
- faire fonctionner l'appareil de mesure de coordonnées (211) et acquérir automatiquement des signaux de fonctionnement qui sont générés pendant le fonctionnement par au moins un premier dispositif générateur, qui fait partie de l'appareil de mesure de coordonnées (211) ou est un dispositif générateur supplémentaire et correspondent à des valeurs d'au moins une grandeur physique caractéristique du fonctionnement de l'appareil de mesure de coordonnées (211),
- générer automatiquement un jeu de données de test à partir des signaux de fonctionnement acquis et transmettre automatiquement le jeu de données de test à un dispositif d'évaluation (7) qui comporte une intelligence artificielle (8),
- évaluer le jeu de données de test au moyen de l'intelligence artificielle (8) sur le dispositif d'évaluation (7), l'intelligence artificielle (8) étant dans un état prêt à l'emploi sur la base d'un apprentissage utilisant des jeux de données d'apprentissage avec des informations supplémentaires associées, qui contiennent chacune au moins une information concernant une aptitude au fonctionnement de l'appareil de mesure de coordonnées (211) ou d'un appareil de mesure de coordonnées (211) comparable, laquelle peut être déterminée à partir du jeu de données d'apprentissage respectif, et l'intelligence artificielle (8) déduisant une assertion concernant l'aptitude au fonctionnement de l'appareil de mesure de coordonnées (211) à partir du jeu de données de test,
- délivrer l'assertion concernant l'aptitude au fonctionnement de l'appareil de mesure de coordonnées (211),
le jeu de données de test et les jeux de données d'apprentissage ayant les valeurs de l'au moins une grandeur physique en fonction d'une grandeur d'ordre, et l'intelligence artificielle (8), lors de l'évaluation du jeu de données de test sur la base de son apprentissage tenant compte de caractéristiques de diagramme d'au moins un diagramme de la dépendance de la grandeur physique par rapport à une grandeur d'ordre du jeu de données de test,
a) déterminant une correspondance ou une ressemblance entre le jeu de données de test et une situation de test enregistrée par les jeux de données d'apprentissage, ou
b) déterminant qu'il n'y a pas de correspondance ou de ressemblance entre le jeu de données de test et une situation de test enregistrée par les jeux de données d'apprentissage, et
dans le cas a), déduisant l'assertion concernant l'aptitude au fonctionnement de l'appareil de mesure de coordonnées (211) selon la situation de test correspondante ou ressemblante enregistrée par les jeux de données d'apprentissage,
**caractérisé en ce que** la grandeur physique ou au moins l'une des grandeurs physiques
- est un courant de moteur mesuré de manière répétée et/ou continue d'un entraînement de l'appareil de mesure de coordonnées (211), et la grandeur d'ordre est un temps ou une grandeur d'indice,
- est un écart de palpage entre une position réelle d'une partie mobile de l'appareil de mesure de coordonnées (211), déterminée par un système de mesure de position de l'appareil de mesure de coordonnées (211), et une position de consigne, la position réelle correspondant dans chaque cas à un palpage optique ou tactile d'une surface d'une pièce au moyen d'un capteur de l'appareil de mesure de coordonnées, et la grandeur d'ordre étant relative à une séquence des palpages ou étant une grandeur d'indice pour distinguer les valeurs de l'écart obtenues de manière répétée,
- est un écart d'un mouvement d'une partie mobile de l'appareil de mesure de coordonnées (211) par rapport à une trajectoire circulaire idéale, l'écart du mouvement dépendant d'un angle qui se situe dans la plage comprise entre 0 et 360 degrés, c'est-à-dire sur une rotation de la partie mobile autour du centre du cercle, ou
- décrit un comportement de palpage d'une tête de mesure active (205) dotée d'un palpeur tactile (111), le comportement de palpage concernant un mouvement du palpeur sur une surface d'une pièce jusqu'à un contact tactile du palpeur avec la surface, et une déviation du palpeur par rapport à un point de référence de la tête de mesure étant mesuré, pendant le mouvement et également à partir de l'établissement du contact tactile, pour décrire le comportement de palpage, en enregistrant en continu des valeurs de mesure d'un système de mesure de position de la tête de mesure.

2. Procédé selon la revendication 1, dans lequel l'apprentissage de l'intelligence artificielle (8) à l'aide des jeux de données d'apprentissage avec les informations supplémentaires associées fait partie du procédé.

3. Dispositif de vérification d'une aptitude au fonctionnement d'un appareil de mesure de coordonnées (211), comportant :
- au moins un premier dispositif générateur qui est configuré pour générer automatiquement des signaux de fonctionnement pendant le fonctionnement de l'appareil de mesure de coordonnées (211), les signaux de fonctionnement correspondant à des valeurs d'au moins une grandeur physique caractéristique du fonctionnement de l'appareil de mesure de coordonnées (211),
- un second dispositif générateur (5), qui est le premier dispositif générateur ou un autre dispositif et est configuré pour générer automatiquement un jeu de données de test à partir des signaux de fonctionnement acquis et pour transmettre automatiquement le jeu de données de test à un dispositif d'évaluation (7),
- le dispositif d'évaluation (7) qui comporte une intelligence artificielle (8),
- le dispositif d'évaluation (7) étant configuré pour évaluer le jeu de données de test au moyen de l'intelligence artificielle (8), l'intelligence artificielle (8) étant dans un état prêt à l'emploi sur la base d'un apprentissage utilisant des jeux de données d'apprentissage avec des informations supplémentaires associées, qui contiennent chacune au moins une information concernant une aptitude au fonctionnement de l'appareil de mesure de coordonnées (211) ou d'un appareil de mesure de coordonnées (211) comparable, laquelle peut être déterminée à partir du jeu de données d'apprentissage respectif, et l'intelligence artificielle (8) étant configurée pour déduire une assertion concernant l'aptitude au fonctionnement de l'appareil de mesure de coordonnées (211) à partir du jeu de données de test,
le jeu de données de test et les jeux de données d'apprentissage ayant les valeurs de l'au moins une grandeur physique en fonction d'une grandeur d'ordre, et l'intelligence artificielle (8) étant configurée, lors de l'évaluation du jeu de données de test sur la base de son apprentissage tenant compte de caractéristiques de diagramme d'au moins un diagramme de la dépendance de la grandeur physique par rapport à une grandeur d'ordre du jeu de données de test,
a) pour déterminer une correspondance ou une ressemblance entre le jeu de données de test et une situation de test enregistrée par les jeux de données d'apprentissage, ou
b) pour déterminer qu'il n'y a pas de correspondance ou de ressemblance entre le jeu de données de test et une situation de test enregistrée par les jeux de données d'apprentissage, et
dans le cas a), pour déduire l'assertion concernant l'aptitude au fonctionnement de l'appareil de mesure de coordonnées (211) selon la situation de test correspondante ou ressemblante enregistrée par les jeux de données d'apprentissage,
**caractérisé en ce que** la grandeur physique ou au moins l'une des grandeurs physiques
- est un courant de moteur mesuré de manière répétée et/ou continue d'un entraînement de l'appareil de mesure de coordonnées (211), et la grandeur d'ordre est un temps ou une grandeur d'indice,
- est un écart de palpage entre une position réelle d'une partie mobile de l'appareil de mesure de coordonnées (211), déterminée par un système de mesure de position de l'appareil de mesure de coordonnées (211), et une position de consigne, la position réelle correspondant dans chaque cas à un palpage optique ou tactile d'une surface d'une pièce au moyen d'un capteur de l'appareil de mesure de coordonnées, et la grandeur d'ordre étant relative à une séquence des palpages ou étant une grandeur d'indice pour distinguer les valeurs de l'écart obtenues de manière répétée,
- est un écart d'un mouvement d'une partie mobile de l'appareil de mesure de coordonnées (211) par rapport à une trajectoire circulaire idéale, l'écart du mouvement dépendant d'un angle qui se situe dans la plage comprise entre 0 et 360 degrés, c'est-à-dire sur une rotation de la partie mobile autour du centre du cercle, ou
- décrit un comportement de palpage d'une tête de mesure active (205) dotée d'un palpeur tactile (111), le comportement de palpage concernant un mouvement du palpeur sur une surface d'une pièce jusqu'à un contact tactile du palpeur avec la surface, et une déviation du palpeur par rapport à un point de référence de la tête de mesure étant mesuré, pendant le mouvement et également à partir de l'établissement du contact tactile, pour décrire le comportement de palpage, en enregistrant en continu des valeurs de mesure d'un système de mesure de position de la tête de mesure.

4. Dispositif selon la revendication 3, le dispositif comportant un dispositif d'apprentissage qui est conçu pour réaliser l'apprentissage de l'intelligence artificielle (8) en utilisant les jeux de données d'apprentissage avec les informations supplémentaires associées.
